# EUROPÄISCHE PATENTSCHRIFT

(11) **EP 3 684 892 B1**
(45) Veröffentlichungstag und Bekanntmachung des Hinweises auf die Patenterteilung: **14.04.2021**
(21) Anmeldenummer: 18750230.7
(22) Anmeldetag: 13.08.2018
(51) Int. Cl.: C10L 10/06, B01F 17/00, C10M 173/00, C10L 1/16, C10L 1/182, C10L 1/188, C10L 1/196, C10L 1/197, C10L 1/198, C10L 1/224, C10L 1/10, C10L 1/12, C10N 30/04, C10N 30/00, C10N 50/00, C10L 10/16

(54) **DISPERSIONEN POLYMERER ÖLADDITIVE**
DISPERSIONS OF POLYMERIC OIL ADDITIVES
DISPERSIONS D'ADDITIFS D'HUILE POLYMÈRE

(30) Priorität: 20.09.2017 EP 17192120
(43) Veröffentlichungstag der Anmeldung: 29.07.2020
(73) Patentinhaber: Clariant International Ltd, 4132 Muttenz (CH)
(72) Erfinder: FEUSTEL, Michael, 55278 Köngernheim (DE); KRULL, Matthias, 55296 Harxheim (DE); GONCHAROV, Victor, Moscow 129085 (RU)
(74) Vertreter: Mikulecky, Klaus
(86) Internationale Anmeldenummer: PCT/EP2018/071865
(87) Internationale Veröffentlichungsnummer: WO 2019/057396

(56) Entgegenhaltungen:
- WO-A1-2008/083724
- WO-A1-2016/137922
- DE-A1-102005 039 143
- RU-C1- 2 082 490

## Beschreibung

Rohöle und aus ihnen hergestellte Produkte sind komplexe Gemische verschiedenartiger Substanzen, von denen einige während Produktion, Transport, Lagerung und/oder Weiterverarbeitung Probleme bereiten können. So enthalten Rohöl wie auch davon abgeleitete Produkte wie zum Beispiel Mitteldestillate, schweres Heizöl, Schiffsdiesel, Bunkeröl oder Rückstandsöle langkettige Kohlenwasserstoffe, deren Löslichkeit im Öl bei niedrigen Temperaturen überschritten wird. Dabei kristallisieren sie unter Ausbildung eines dreidimensionalen Netzwerks aus Schuppen und/oder feinen Nadeln. Dadurch wird bei niedrigen Temperaturen unter anderem die Fließfähigkeit der Öle, zum Beispiel beim Transport in Pipelines, beeinträchtigt und in Lagertanks bleiben zwischen den insbesondere an den Tankwänden auskristallisierenden Paraffinen beträchtliche Mengen an Öl eingeschlossen.

Daher werden paraffinhaltigen Mineralölen für Transport und Lagerung oftmals Additive zur Modifizierung der Paraffinkristalle zugesetzt. Dabei handelt es sich vorwiegend um synthetische polymere Verbindungen. Die so genannten Paraffininhibitoren bzw. Pour Point Depressanten verbessern die Kaltfließfähigkeit der Öle z. B. durch Nukleierung von Paraffinkristallen und/oder Cokristallisation mit den bei Abkühlung ausfallenden Paraffinen, wodurch die Ausbildung eines dreidimensionalen Netzwerks aus Paraffinkristallen verhindert wird. Oftmals bewirken sie auch eine Dispergierung der ausgefallenen Kristalle. Sie führen so zu einer Absenkung des Stockpunkts der paraffinhaltigen Mineralöle und damit zu einer verbesserten Fließfähigkeit bei niedrigen Temperaturen.

Die gebräuchlichen polymeren Paraffininhibitoren sind öllösliche Verbindungen und in Wasser unlöslich. Sie werden üblicherweise durch Massepolymerisation oder Lösungspolymerisation in organischen, vorwiegend aromatischen Lösemitteln hergestellt. Auf Grund der für eine gute Wirksamkeit erforderlichen langkettigen paraffinartigen Strukturelemente und hoher Molekulargewichte dieser Polymere besitzen ihre konzentrierten Lösungen in organischen Lösemitteln Eigenstockpunkte, die oftmals oberhalb der bei ihrer Verwendung herrschenden Umgebungstemperaturen liegen. Für den Einsatz müssen diese Additive folglich stark verdünnt oder bei erhöhten Temperaturen vorgehalten und gehandhabt werden, was beides zu unerwünschtem Mehraufwand führt.

Es wurden Verfahren zur Herstellung von Paraffininhibitoren durch Emulsionspolymerisation vorgeschlagen, die zu besser handhabbaren Additiven führen sollen.

So offenbart WO-03/014170 durch Emulsionscopolymerisation von Alkyl(meth)acrylaten mit wasserlöslichen und/oder polaren Comonomeren hergestellte Pour Point Depressanten. Diese werden beispielsweise in Dipropylenglykolmonomethylether bzw. in Wasser/Dowanol® mit Alkylbenzylammoniumchlorid und einem Fettalkoholalkoxylat als Emulgatoren hergestellt.

EP-A-0359061 offenbart Emulsionspolymerisate langkettiger Alkyl(meth)acrylate mit sauren Comonomeren.

Allerdings ist die Wirksamkeit dieser Emulsionscopolymere, vermutlich auf Grund der durch das Polymerisationsverfahren veränderten Molekulargewichtsverteilung sowie der zwecks Verbesserung ihrer Emulgiereigenschaften eingebauten stark polaren Comonomereinheiten, in der Regel unbefriedigend.

Ein weiterer Lösungsansatz zur Herstellung besser handhabbarer Paraffininhibitoren besteht in der Emulgierung von in organischen Lösemitteln hergestellten und/oder in derartigen Lösemitteln gelösten Polymerisaten in einem Nichtlösemittel für den polymeren Wirkstoff.

So offenbart EP-A-0448166 Dispersionen von Polymeren ethylenisch ungesättigter Verbindungen, die aliphatische Kohlenwasserstoffreste mit mindestens 10 C-Atomen enthalten, in Glykolen und gegebenenfalls Wasser. Als Dispergatoren werden Ethersulfate und Lignosulfonate genannt. Die Emulsionen sind bei 50 °C mindestens einen Tag stabil und bei Temperaturen hinab bis zu 0 °C und teilweise bis hinab zu -20 °C flüssig.

US-5851429 offenbart Dispersionen, bei denen ein bei Raumtemperatur fester Pour Point Depressant in einem Nichtlösemittel dispergiert ist. Als geeignete "Nicht"-Lösemittel werden unter anderem Alkohole, Ester, Ether, Lactone, Ethoxyethylacetat, Ketone, Glykole und Alkylglykole sowie deren Mischungen mit Wasser genannt. Als Dispergatoren enthalten die Dispersionen anionische Tenside wie neutralisierte Fettsäuren oder Sulfonsäuren, kationische, nichtionische oder zwitterionische Detergentien.

WO-98/33846 offenbart Dispersionen von Paraffininhibitoren auf Basis von Esterpolymeren sowie deren Lösung in aliphatischen oder aromatischen Kohlenwasserstoffen in einem Nichtlösemittel wie beispielsweise Glykol und/oder Wasser. Als Dispergatoren werden anionische Tenside wie Carbon- und Sulfonsäuresalze und insbesondere Fettsäuresalze, nichtionische Dispergatoren wie Nonylphenolalkoxilate oder kationische Dispergatoren wie CTAB eingesetzt.

WO-05/023907 offenbart Emulsionen von mindestens zwei verschiedenen Paraffininhibitoren ausgewählt aus Ethylen-Vinylacetat-Copolymeren, Poly(alkylacrylaten) und mit Alkylacrylat gepfropften Ethylen-Vinylacetat-Copolymeren. Die Emulsionen enthalten Wasser, ein organisches Lösemittel, nicht weiter spezifizierte anionische, kationische und/oder nichtionische Tenside, sowie ein wasserlösliches Lösemittel.

WO-2008/125588 offenbart ein Verfahren zur Herstellung einer Paraffininhibitor-Formulierung enthaltend eine wachsförmige Paraffininhibitor-Komponente, eine Emulgatorkomponente und gegebenenfalls Wasser bei dem oberhalb des Schmelzpunkts der Paraffininhibitor-Komponente eine o/w-Emulsion erzeugt und anschließend abgekühlt wird. Die verwendeten Tenside und Tensidgemische können anionisch, nichtionisch, amphoter oder kationisch sein. Als Tensidsystem beispielhaft belegt ist eine C₁₆-C₁₈-Fettalkoholethoxylat-Mischung mit einem HLB von ca. 15.

DE-102005039143 lehrt ein Mittel zur Hydrophilisierung organischer Stoffe, welches mindestens ein nichtionisches Tensid sowie mindestens eine membranbildende Substanz, insbesondere ein anionisches Tensid, umfasst, einen organischen Stoff, welcher ein solches Mittel enthält, ein Verfahren zur Hydrophilisierung organischer Stoffe sowie die Verwendung solcher Hydrophilisierungsmittel. Bevorzugte Verwendungen sind dabei die Hydrophilisierung von Schneidkühlmitteln auf organischer Basis, Zieh- und Stanzölen auf organischer Basis, Dieselkraftstoffen, Ottokraftstoffen, Schmierölen, Schwerölen, raffinierten Erdölfraktionen, nicht raffiniertem Erdöl und seinen Fraktionen.

RU-2082490 lehrt einen Dispergator, der ethoxylierte Alkohole oder Alkylphenole umfasst, sowie zusätzlich Ethercarboxylate. Die Ethercarboxylate entsprechen der Formel R-(OC₂H₄)ₙ-CH₂-COONa, worin R für n-C₁₀ bis C₁₈-Alkyl oder Alkylphenyl, und n für 7 - 12 steht. Das Mischverhältnis liegt bei 0,63 : 0,37 bis 0,17 :0,83.

WO-2008/083724 offenbart Dispersionen, enthaltend I) mindestens ein als Kaltfließverbesserer für Mineralöle wirksames öllösliches Polymer, II) mindestens ein organisches, mit Wasser nicht mischbares Lösemittel, III) Wasser, IV) mindestens ein Alkanolaminsalz einer polyzyklischen Carbonsäure und V) gegebenenfalls mindestens ein mit Wasser mischbares organisches Lösemittel. Sie werden zur Verbesserung der Kaltfließeigenschaften von paraffinhaltigen Mineralölen und davon abgeleiteten Produkten verwendet. Die Dispersionen haben niedrige Viskositäten und in speziellen Ausführungsformen Eigenstockpunkte von teilweise unterhalb -24 °C.

WO-2016/137922 offenbart wässrige Dispersionen umfassend ein Ethylen-Vinylacetat-Copolymer (EVA), ein Dispergiermittel, ein polyethoxyliertes nichtionisches Tensid, einen Kohlenwasserstoff als Lösemittel, Wasser und gegebenenfalls einen wässrigen Gefrierpunkterniedriger und deren Verwendung als Pour Point Depressant. Die Funktion des polyethoxylierten nichtionischen Tensids ist es dabei, die Stabilität der Dispersion in Gegenwart von Kohlenwasserstoffen aufrechtzuerhalten und ein Gelieren und/oder eine Ausfällung des polymeren Wirkstoffs zu verhindern.

WO-2017/093962 offenbart wässrige Emulsionen enthaltend Lösungen von Ethylen-Vinylacetat-Copolymeren und/oder Polyalkyl(meth)acrylaten in hochsiedenen organischen Lösemitteln, wobei die Differenz zwischen den Hildebrand'schen Löslichkeitsparametern von Polymer und organischem Lösemittel kleiner als 2 ist. Als Emulgatoren werden Alkali- und Erdalkalimetallsalze von Fettsäuren eingesetzt.

Problematisch bei den Lösungsvorschlägen des Standes der Technik ist vor allem eine noch unbefriedigende Handhabbarkeit höher konzentrierter Additivformulierungen bei sehr niedrigen Temperaturen. Neben der über den Pour Point gemäß ISO 3016 bestimmbaren Fließfähigkeit ist dabei vor allem die bei niedrigen Temperaturen stark ansteigende Viskosität von Paraffininhibitoren enthaltenden Dispersionen problematisch. Obwohl die Dispersionen des Standes der Technik oftmals noch fließfähig sind, werden zur Förderung der hochviskosen Produkte hohe Kräfte benötigt, was den Einsatz spezieller Pumpen erfordert. Darüber hinaus erfordern Aufnahme und Wiederaufnahme der Additivdosierung der in einer Förderleitung statisch abgekühlten Dispersionen, wie sie beispielsweise bei Produktionsaufnahme oder -unterbrechungen bei der Ölförderung auftreten, häufig sehr hohe Drücke zur Überwindung der Fließgrenze. Die Fließgrenze ist die kleinste Schubspannung, oberhalb derer sich eine Probe wie eine Flüssigkeit verhält und somit die kleinste Kraft, die benötigt wird, um die Ruhestruktur einer Probe zu brechen. Die Fließgrenze wird üblicherweise mit einem Rotationsviskosimeter gemäß DIN EN ISO 3219 bestimmt. Weiterhin wäre es wünschenswert, die Einmischbarkeit der hydrophoben Wirkstoffe aus ihrem hydrophilen Trägermedium in das zu behandelnde Mineralöl zu verbessern. Darüber hinaus muss die Langzeitstabilität der Dispersionen über mehrere Wochen bis Monate gewährleistet sein.

Es wurden folglich Additive gesucht, die als Paraffininhibitoren und speziell als Pour Point Depressanten für paraffinhaltige Mineralöle geeignet sind und als Konzentrate bei niedrigen Temperaturen von unter -10 °C, speziell unter -20 °C und insbesondere unter -30 °C fließfähig und zudem leicht pumpbar sind. Um die Verwendung bei niedrigen Temperaturen zu vereinfachen, sollen sie bei diesen Temperaturen eine möglichst niedrige Viskosität besitzen. Zur Sicherstellung der erforderlichen Dosierraten bei Aufnahme der Ölproduktion bzw. bei der Wiederaufnahme der Förderung nach Produktionsunterbrechungen sollen sie auch bei solch niedrigen Temperaturen eine möglichst niedrige Fließgrenze aufweisen. Die Additive sollen über einen längeren Zeitraum von Wochen bis Monaten auch bei erhöhten Temperaturen ihre anwendungstechnischen sowie physikalischen Eigenschaften wie insbesondere ihre Phasenstabilität behalten. Darüber hinaus sollen sie mindestens die gleiche Wirksamkeit wie ihre aus mineralölbasierten Formulierungen unter optimalen Einmischbedingungen eingesetzten Wirkstoffe zeigen.

Überraschenderweise wurde gefunden, dass wässrige Dispersionen von als Kaltfließverbesserer für Mineralöle wirksamen öllöslichen Polymeren, die als Dispergiermittel ein Salz einer Ethercarbonsäure und ein nichtionisches Tensid enthalten überlegene Eigenschaften besitzen. Derartige Dispersionen in einer kontinuierlichen Phase aus Wasser und einem wasserlöslichen organischen Lösemittel sind bei Temperaturen von unter -20 °C und oftmals auch unter -30 °C fließfähig. Sie besitzen auch bei niedrigen Temperaturen eine sehr geringe Viskosität und eine niedrige Fließgrenze. Sowohl bei niedrigen Temperaturen als auch bei erhöhten Temperaturen von beispielsweise +50 °C sind sie über mehrere Monate stabil. Ihre Anwendung bei niedriger Temperatur von Öl und/oder Additiv führt zudem zu einer wirksameren Paraffininhibierung als die Formulierung des gleichen Wirkstoffs gemäß bisherigem Stand der Technik. Darüber hinaus ist ihre paraffininhibierende Wirksamkeit in Mineralölen derjenigen der aus organischem Lösemittel applizierten Formulierung der entsprechenden Wirkstoffe in jedem Falle vergleichbar, oftmals sogar überlegen.

Gegenstand der Erfindung sind somit Dispersionen, enthaltend eine organische Phase dispergiert in einer wässrigen Phase, worin
a) die dispergierte organische Phase mindestens ein als Kaltfließverbesserer für Mineralöle wirksames öllösliches Polymer als Komponente I) und mindestens ein organisches, mit Wasser nicht mischbares Lösemittel als Komponente II) enthält,
b) die kontinuierliche wässrige Phase Wasser als Komponente IV) und mindestens ein organisches, mit Wasser mischbares Lösemittel als Komponente V) enthält,
   dadurch gekennzeichnet dass die Dispersion
c) 0,5 bis 12 Gew.-% eines Dispergiermittels als Komponente III) enthält, welches, bezogen auf die Gesamtmenge an Dispergiermittel,
   i) 5 - 95 Gew.-% eines Salzes einer Ethercarbonsäure und
   ii) 95 - 5 Gew.-% eines nichtionischen Tensids mit einem nach Griffin gemessenen HLB-Wert von größer als 7
umfasst.

Ein weiterer Gegenstand der Erfindung ist ein Verfahren zur Herstellung von Dispersionen, enthaltend eine organische Phase dispergiert in einer wässrigen Phase, worin
a) die dispergierte organische Phase mindestens ein als Kaltfließverbesserer für Mineralöle wirksames öllösliches Polymer als Komponente I) und mindestens ein organisches, mit Wasser nicht mischbares Lösemittel als Komponente II) enthält,
b) die kontinuierliche wässrige Phase Wasser als Komponente IV) und mindestens ein organisches, mit Wasser mischbares Lösemittel als Komponente V) enthält,
   dadurch gekennzeichnet dass die Dispersion
c) 0,5 bis 12 Gew.-% eines Dispergiermittels als Komponente III) enthält, welches, bezogen auf die Gesamtmenge an Dispergiermittel,
   i) 5 - 95 Gew.-% eines Salzes einer Ethercarbonsäure und
   ii) 95 - 5 Gew.-% eines nichtionischen Tensids mit einem nach Griffin gemessenen HLB-Wert von größer als 7
umfasst,
indem die Bestandteile I, II, III, IV und V unter Rühren bei Temperaturen oberhalb 50 °C durch Mischen in eine Dispersion überführt werden.

Ein weiterer Gegenstand der Erfindung ist die Verwendung von Dispersionen, enthaltend eine organische Phase dispergiert in einer wässrigen Phase, worin
a) die dispergierte organische Phase mindestens ein als Kaltfließverbesserer für Mineralöle wirksames öllösliches Polymer als Komponente I) und mindestens ein organisches, mit Wasser nicht mischbares Lösemittel als Komponente II) enthält,
b) die kontinuierliche wässrige Phase Wasser als Komponente IV) und mindestens ein organisches, mit Wasser mischbares Lösemittel als Komponente V) enthält,
   dadurch gekennzeichnet dass die Dispersion
c) 0,5 bis 12 Gew.-% eines Dispergiermittels als Komponente III) enthält, welches, bezogen auf die Gesamtmenge an Dispergiermittel,
   i) 5 - 95 Gew.-% eines Salzes einer Ethercarbonsäure und
   ii) 95 - 5 Gew.-% eines nichtionischen Tensids mit einem nach Griffin gemessenen HLB-Wert von größer als 7
umfasst,
zur Verbesserung der Kaltfließeigenschaften von paraffinhaltigen Mineralölen und daraus hergestellten Produkten.

Ein weiterer Gegenstand der Erfindung ist ein Verfahren zur Verbesserung der Kaltfließeigenschaften von paraffinhaltigen Mineralölen und daraus hergestellten Produkten, indem paraffinhaltigen Mineralölen und daraus hergestellten Produkten Dispersionen zugegeben werden, die eine organische Phase dispergiert in einer wässrigen Phase enthalten, worin
a) die dispergierte organische Phase mindestens ein als Kaltfließverbesserer für Mineralöle wirksames öllösliches Polymer als Komponente I) und mindestens ein organisches, mit Wasser nicht mischbares Lösemittel als Komponente II) enthält,
b) die kontinuierliche wässrige Phase Wasser als Komponente IV) und mindestens ein organisches, mit Wasser mischbares Lösemittel als Komponente V) enthält,
   dadurch gekennzeichnet dass die Dispersion
c) 0,5 bis 12 Gew.-% eines Dispergiermittels als Komponente III) enthält, welches, bezogen auf die Gesamtmenge an Dispergiermittel,
   i) 5 - 95 Gew.-% eines Salzes einer Ethercarbonsäure und
   ii) 95 - 5 Gew.-% eines nichtionischen Tensids mit einem nach Griffin gemessenen HLB-Wert von größer als 7
umfasst.

Unter Kaltfließverbesserern für Mineralöle werden all solche Polymere verstanden, die die Kälteeigenschaften und insbesondere die Kaltfließfähigkeit von Mineralölen verbessern. Die Kälteeigenschaften von Mineralölen werden beispielsweise als Pour Point, Cloud Point, WAT (Wax Appearance Temperature), Paraffinabscheidungsrate, Viskosität und/oder Cold Filter Plugging Point (CFPP) gemessen.

Bevorzugte Kaltfließverbesserer I) sind beispielsweise
i) Copolymere aus Ethylen und ethylenisch ungesättigten Estern, Ethern und/oder Alkenen,
ii) Homo- oder Copolymere von C₁₀-C₃₀-Alkylreste tragenden Estern, Amiden und/oder Imiden ethylenisch ungesättigter Carbonsäuren,
iii) mit ethylenisch ungesättigten Estern und/oder Ethern gepfropfte Ethylen-Copolymere,
iv) Homo- und Copolymere höherer Olefine, sowie
v) Kondensationsprodukte aus mindestens einen Alkylrest tragenden Phenolen und Aldehyden und/oder Ketonen.

Als Copolymere aus Ethylen und ethylenisch ungesättigten Estern, Ethern oder Alkenen i) eignen sich insbesondere solche, die neben Ethylen 4 bis 18 mol-%, insbesondere 6 bis 15 mol-% mindestens eines Vinylesters, Acrylsäureesters, Methacrylsäureesters, Alkylvinylethers und/oder Alkens enthalten.

Bei den Vinylestern handelt es sich vorzugsweise um solche der Formel (1)

CH2 = CH-OCOR¹ (1)

worin
- R¹: für C₁- bis C₃₀-Alkyl, vorzugsweise für C₄- bis C₁₆-Alkyl und speziell für C₆- bis C₁₂-Alkyl wie beispielsweise für C₁- bis C₁₆-Alkyl oder für C₁- bis C₁₂-Alkyl
steht.

Die Alkylreste können linear oder verzweigt sein. In einer bevorzugten Ausführungsform handelt es sich um lineare Alkylreste mit 1 bis 18 C-Atomen und speziell mit 1 bis 12 C-Atomen. In einer weiteren bevorzugten Ausführungsform steht R¹ für einen verzweigten Alkylrest mit 3 bis 30 C-Atomen und bevorzugt mit 5 bis 16 C-Atomen. Besonders bevorzugte Vinylester leiten sich von sekundären und insbesondere tertiären Carbonsäuren ab, deren Verzweigung sich in alpha-Position zur Carbonylgruppe befindet. Speziell bevorzugt sind dabei die auch als Versaticsäurevinylester bezeichneten Vinylester tertiärer Carbonsäuren, die Neoalkylreste mit 5 bis 12 C-Atomen, insbesondere mit 8, 9, 10 oder 11 Kohlenstoffatomen besitzen. Geeignete Vinylester umfassen Vinylacetat, Vinylpropionat, Vinylbutyrat, Vinylisobutyrat, Vinylhexanoat, Vinylheptanoat, Vinyloctanoat, Pivalinsäurevinylester, 2-Ethylhexansäurevinylester, Vinyllaurat, Vinylstearat sowie Versaticsäureester wie Neononansäurevinylester, Neodecansäurevinylester, Neoundecansäurevinylester. Insbesondere bevorzugt als Vinylester ist Vinylacetat.

In einer weiteren Ausführungsform können die genannten Alkylgruppen mit einer oder mehreren Hydroxylgruppen substituiert sein.

In einer weiteren bevorzugten Ausführungsform enthalten diese Ethylen-Copolymere Vinylacetat und mindestens einen weiteren Vinylester der Formel (1) worin R¹ für C₄- bis C₃₀-Alkyl, vorzugsweise C₄- bis C₁₆-Alkyl, speziell C₆- bis C₁₂-Alkyl steht. Als weitere Vinylester sind dabei die oben beschriebenen Vinylester dieses Kettenlängenbereichs bevorzugt.

Bei den Acrylsäure- und Methacrylsäureestern handelt es sich vorzugsweise um solche der Formel (2)

CH₂ = CR²-COOR³ (2)

worin
- R²: für Wasserstoff oder Methyl und
- R³: für C₁- bis C₃₀-Alkyl, vorzugsweise für C₄- bis C₁₆-Alkyl und speziell für C₆- bis C₁₂-Alkyl wie beispielsweise für C₁- bis C₁₆-Alkyl, für C₁- bis C₁₂-Alkyl, für C₄- bis C₃₀-Alkyl, für C₄- bis C₁₂-Alkyl, für C₆- bis C₃₀-Alkyl oder für C₆- bis C₁₆-Alkyl
steht.

Die Alkylreste können linear oder verzweigt sein. In einer bevorzugten Ausführungsform sind sie linear. In einer weiteren bevorzugten Ausführungsform besitzen sie eine Verzweigung in 2-Position zur Estergruppierung. Geeignete Acrylester umfassen z. B. Methyl(meth)acrylat, Ethyl(meth)acrylat, Propyl(meth)acrylat, n- und iso-Butyl(meth)acrylat, Hexyl-, Octyl-, 2-Ethylhexyl-, 2-Propylheptyl-, 4-Methyl-2-propylhexyl-, Decyl-, Dodecyl-, Tetradecyl-, Hexadecyl-, Octadecyl(meth)acrylat sowie Mischungen dieser Comonomere, wobei die Formulierung (Meth)acrylat die entsprechenden Ester der Acrylsäure und der Methacrylsäure umfasst.

Bei den Alkylvinylethern handelt es sich vorzugsweise um Verbindungen der Formel (3)

CH₂ = CH-OR⁴ (3)

worin
- R⁴: für C₁- bis C₃₀-Alkyl, vorzugsweise für C₄- bis C₁₆-Alkyl und speziell für C₆- bis C₁₂-Alkyl wie beispielsweise für C₁- bis C₁₆-Alkyl, für C₁- bis C₁₂-Alkyl, für C₄- bis C₃₀-Alkyl, für C₄- bis C₁₂-Alkyl, für C₆- bis C₃₀-Alkyl oder für C₆- bis C₁₆-Alkyl
steht.

Die Alkylreste können linear oder verzweigt sein. Beispielsweise seien genannt Methylvinylether, Ethylvinylether, iso-Butylvinylether.

Bei den Alkenen handelt es sich vorzugsweise um einfach ungesättigte Kohlenwasserstoffe mit 3 bis 30 Kohlenstoffatomen, insbesondere 4 bis 16 Kohlenstoffatomen und speziell 5 bis 12 Kohlenstoffatomen. Geeignete Alkene umfassen Propen, Buten, Isobuten, Penten, Hexen, 4-Methylpenten, Hepten, Octen, Decen, Diisobutylen sowie Norbornen und seine Derivate wie Methylnorbornen und Vinylnorbornen.

Die Alkylreste R¹, R³ und R⁴ können in untergeordneten Mengen funktionelle Gruppen wie beispielsweise Amino-, Amido-, Nitro-, Cyano-, Hydroxy-, Keto-, Carbonyl-, Carboxy-, Ester-, Sulfogruppen und/oder Halogenatome tragen, solange diese den Kohlenwasserstoffcharakter der genannten Reste nicht wesentlich beeinträchtigen. In einer bevorzugten Ausführungsform tragen die Alkylreste R¹, R³ und R⁴ jedoch keine basisch reagierenden und insbesondere keine stickstoffhaltigen funktionellen Gruppen.

Besonders bevorzugte Terpolymerisate enthalten außer Ethylen bevorzugt 3,5 bis 17 mol-%, insbesondere 5 bis 15 mol-% wie beispielsweise 3,5 bis 15 mol-% oder 5 bis 17 mol-% Vinylacetat und 0,1 bis 10 mol-%, insbesondere 0,2 bis 5 mol-% wie beispielsweise 0,1 bis 5 mol-% oder 0,2 bis 10 mol-% mindestens eines langkettigen Vinylesters, (Meth)acrylesters und/oder Alkens, wobei der gesamte Comonomergehalt zwischen 4 und 18 mol-% und bevorzugt zwischen 7 und 15 mol-% wie beispielsweise zwischen 4 und 17 mol-% oder zwischen 7 und 18 mol-% liegt. Besonders bevorzugte Termonomere sind dabei 2-Ethylhexansäurevinylester, Neononansäurevinylester und Neodecansäurevinylester. Weitere besonders bevorzugte Copolymere enthalten neben Ethylen und 3,5 bis 17,5 mol-% Vinylestern noch 0,1 bis 10 mol-% Olefine wie Propen, Buten, Isobuten, Hexen, 4-Methylpenten, Octen, Diisobutylen, Norbornen und/oder Styrol.

Das mittels GPC gegen Poly(styrol)-Standards bestimmte zahlenmittlere Molekulargewicht bevorzugter Ethylen-Copolymere i) liegt zwischen 1.000 und 100.000 g/mol, besonders bevorzugt zwischen 2.500 und 50.000 g/mol und speziell zwischen 5.000 und 20.000 g/mol wie beispielsweise zwischen 1.000 und 50.000 g/mol, zwischen 1.000 und 20.000 g/mol, zwischen 2.500 und 100.000 g/mol, zwischen 2.500 und 20.000 g/mol, zwischen 5.000 und 100.000 g/mol oder zwischen 5.000 und 50.000 g/mol. Die gemäß DIN 53735 bei 190 °C und einer Auflagekraft von 2,16 kg gemessenen MFI₁₉₀-Werte besonders bevorzugter Ethylen-Copolymere i) liegen zwischen 0,1 und 1.200 g/10 min, insbesondere zwischen 1 und 900 g/10 min und speziell zwischen 2 und 500 g/10 min wie beispielsweise zwischen 0,1 und 900 g/10 min, zwischen 0,1 und 500 g/10 min, zwischen 1 und 1.200 g/10 min, zwischen 1 und 500 g/10 min, zwischen 2 und 1200 g/10 min oder zwischen 2 und 900 g/10 min. Die mittels ¹H-NMR-Spektroskopie bestimmten Verzweigungsgrade liegen bevorzugt zwischen 1 und 9 CH₃/100 CH₂-Gruppen, insbesondere zwischen 2 und 6 CH₃/100 CH₂-Gruppen, die nicht aus den Comonomeren stammen.

Bevorzugt werden Mischungen aus zwei oder mehr der oben genannten Ethylen-Copolymere eingesetzt. Besonders bevorzugt unterscheiden sich die den Mischungen zu Grunde liegenden Polymere in mindestens einem Charakteristikum. Beispielsweise können sie unterschiedliche Comonomere enthalten, unterschiedliche Comonomergehalte, Molekulargewichte und/oder Verzweigungsgrade aufweisen.

Die Herstellung der Copolymere i) erfolgt nach bekannten Verfahren (vgl. hierzu z. B. Ullmanns Encyclopädie der Technischen Chemie, 5. Auflage, Vol. A 21, Seiten 505 - 513). Geeignet sind die Polymerisation in Lösung, in Suspension, in der Gasphase und die Hochdruckmassepolymerisation. Vorzugsweise wendet man die Hochdruckmassepolymerisation an, die bei Drücken von 50 bis 400 MPa, vorzugsweise 100 bis 300 MPa und Temperaturen von 50 bis 350 °C, vorzugsweise 100 bis 300 °C, durchgeführt wird. Die Reaktion der Comonomere wird durch Radikale bildende Initiatoren (Radikalkettenstarter) eingeleitet. Zu dieser Substanzklasse gehören z. B. Sauerstoff, Hydroperoxide, Peroxide und Azoverbindungen wie Cumolhydroperoxid, t-Butylhydroperoxid, Dilauroylperoxid, Dibenzoylperoxid, Bis(2-ethylhexyl)-peroxidicarbonat, t-Butylpermaleinat, t-Butylperbenzoat, Dicumylperoxid, t-Butylcumylperoxid, Di-(t-butyl)peroxid, 2,2'-Azo-bis(2-methylpropanonitril), 2,2'-Azo-bis(2-methyibutyronitril). Die Initiatoren werden einzeln oder als Gemisch aus zwei oder mehr Substanzen in Mengen von 0,01 bis 20 Gew.-%, vorzugsweise 0,05 bis 10 Gew.-% wie beispielsweise 0,01 bis 10 Gew.-%, bezogen auf das Comonomerengemisch, eingesetzt.

Das gewünschte Molekulargewicht der Copolymere i) wird bei gegebener Zusammensetzung des Comonomerengemisches durch Variation der Reaktionsparameter Druck und Temperatur und gegebenenfalls durch Zusatz von Moderatoren eingestellt. Als Moderatoren haben sich Wasserstoff, gesättigte und ungesättigte Kohlenwasserstoffe, wie beispielsweise Propan und Propen, Aldehyde, wie beispielsweise Propionaldehyd, n-Butyraldehyd und Isobutyraldehyd, Ketone, wie beispielsweise Aceton, Methylethylketon, Methylisobutylketon und Cyclohexanon oder Alkohole wie beispielsweise Butanol, bewährt. In Abhängigkeit von der angestrebten Viskosität werden die Moderatoren in Mengen bis zu 20 Gew.-%, vorzugsweise 0,05 bis 10 Gew.-%, bezogen auf das Comonomerengemisch, angewendet.

Die Hochdruckmassepolymerisation wird in bekannten Hochdruckreaktoren, z. B. Autoklaven oder Rohrreaktoren diskontinuierlich oder kontinuierlich durchgeführt, besonders bewährt haben sich Rohrreaktoren. Lösungsmittel wie aliphatische, aromatische und/oder alkylaromatische Kohlenwasserstoffe oder Kohlenwasserstoffgemische wie beispielsweise Toluol oder Xylol können im Reaktionsgemisch enthalten sein, wenngleich sich die lösungsmittelfreie Arbeitsweise besonders bewährt hat. Nach einer bevorzugten Ausführungsform der Polymerisation wird das Gemisch aus den Comonomeren, dem Initiator und, sofern eingesetzt, dem Moderator, einem Rohrreaktor über den Reaktoreingang sowie über einen oder mehrere Seitenäste zugeführt. Hierbei können die Comonomerenströme unterschiedlich zusammengesetzt sein (EP-B-0271738).

Als Homo- oder Copolymere von C₁₀-C₃₀-Alkylreste tragenden Estern und Amiden ethylenisch ungesättigter Carbonsäuren (ii) eignen sich insbesondere solche, die wiederkehrende Strukturelemente der Formel (4) enthalten, 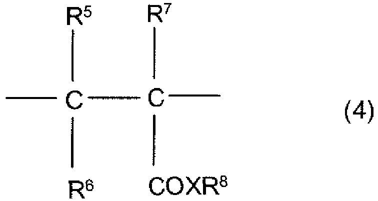 wobei
- R⁵ und R⁶: unabhängig voneinander für Wasserstoff, Phenyl oder eine Gruppe der Formel COXR⁹,
- R⁷: für Wasserstoff, Methyl oder eine Gruppe der Formel -CH₂COXR⁹,
- R⁸: für einen C₁₀- bis C₃₀-Alkyl- oder Alkylenrest, vorzugsweise für einen C₁₂- bis C₂₆-Alkyl- oder Alkylenrest wie beispielsweise für einen C₁₀- bis C₂₆-Alkyl- oder Alkylenrest oder für einen C₁₂- bis C₃₀-Alkyl- oder Alkylenrest,
- R⁹: für Wasserstoff oder R⁸ und
- X: für O, NH oder NR⁸ steht,
mit der Maßgabe, dass diese wiederkehrenden Struktureinheiten mindestens eine und höchstens zwei von einer Carbonsäure abgeleitete Ester- und/oder Amideinheiten in einem Strukturelement enthalten.

Besonders geeignet sind Homo- und Copolymere, worin R⁵ und R⁶ für Wasserstoff, X für O und R⁷ für Wasserstoff oder Methyl steht. Diese Struktureinheiten leiten sich von Estern ethylenisch ungesättigter Monocarbonsäuren wie beispielsweise Acrylsäure, Methacrylsäure oder Zimtsäure ab.

Weiterhin besonders geeignet sind Copolymere, worin eines von R⁵ und R⁶ für Wasserstoff und das andere für eine Gruppe der Formel COXR⁹ sowie R⁷ für Wasserstoff oder worin R⁵ und R⁶ für Wasserstoff und R⁷ für eine Gruppe der Formel -CH₂COXR⁹ steht. Diese Struktureinheiten leiten sich von Halbestern, Diestern, Halbamiden, Diamiden und Esteramiden von Dicarbonsäuren wie z. B. Maleinsäure, Fumarsäure und Itaconsäure ab. Halbester und Halbamide von Dicarbonsäuren sind beispielsweise zugänglich durch unvollständige Umsetzung der Dicarbonsäure oder ihres Anhydrids mit einem Amin und/oder Ester. Bevorzugte Halbester und Halbamide entstehen beispielsweise durch Umsetzung einer Dicarcarbonsäure mit 1 bis 2 Equivalenten Alkohol bzw. Amin, wobei freie Carboxylgruppen resultieren. Besonders bevorzugt sind die Ester von Copolymeren der Malein- sowie der Fumarsäure.

Für die Veresterung der ethylenisch ungesättigten Mono- und Dicarbonsäuren geeignete Alkohole sind solche mit 10 bis 50 C-Atomen, besonders bevorzugt solche mit 12 bis 30 C-Atomen und insbesondere solche mit 18 bis 24 C-Atomen wie beispielsweise solche mit 10 bis 30 C-Atomen, mit 10 bis 24 C-Atomen, mit 12 bis 50 C-Atomen, mit 12 bis 24 C-Atomen, mit 18 bis 50 C-Atomen oder mit 18 bis 30 C-Atomen. Sie können natürlichen oder synthetischen Ursprungs sein. Die Alkylreste sind dabei bevorzugt linear oder zumindest weitestgehend linear. Geeignete Fettalkohole umfassen 1-Decanol, 1-Dodecanol, 1-Tridecanol, Isotridecanol, 1-Tetradecanol, 1-Hexadecanol, 1-Octadecanol, Eicosanol, Docosanol, Tetracosanol, Hexacosanol sowie natürlich vorkommende Mischungen wie beispielsweise Cocosfettalkohol, Talgfettalkohol, hydrierten Talgfettalkohol und Behenylalkohol. In einer bevorzugten Ausführungsform haben sich Mischungen der genannten linearen Fettalkohole mit einem oder mehreren verzweigten Alkoholen bewährt. Bevorzugte verzweigte Alkohole haben C-Atome im oben genannten Bereich. Weiterhin bevorzugt tragen sie in 2-Stellung zur Hydroxylgruppe einen Alkylrest mit 6 bis 20 C-Atomen. Beispiele für bevorzugte verzweigte Alkohole sind Guerbet-Alkohole wie 2-Dodecyl-hexadecanol, 2-Octyldodecanol und 2-Tetradecyl-octadecanol. Bevorzugt liegt der Anteil von verzweigten Alkoholen an der Gesamtmenge an Alkoholen zwischen 1 und 50 mol-% und speziell zwischen 5 und 30 mol-% wie beispielsweise zwischen 1 und 30 mol-% oder zwischen 5 und 50 mol-%.

Für die Amidierung der ethylenisch ungesättigten Mono- und Dicarbonsäuren geeignete Fettamine sind solche mit 10 bis 30 C-Atomen, besonders bevorzugt solche mit 12 bis 26 C-Atomen und insbesondere solche mit 18 bis 24 C-Atomen wie beispielsweise solche mit 10 bis 16 C-Atomen, mit 10 bis 24 C-Atomen, mit 12 bis 30 C-Atomen, mit 12 bis 24 C-Atomen, mit 18 bis 30 C-Atomen oder mit 18 bis 26 C-Atomen. Sie können natürlichen oder synthetischen Ursprungs sein. Die Alkylreste sind dabei bevorzugt linear oder zumindest weitestgehend linear. Geeignete Fettamine umfassen Tetradecylamin, Hexadecylamin, Octadecylamin, Behenylamin und Oleylamin. Bei der Umsetzung von Copolymeren der Maleinund der Fumarsäure mit primären Aminen können auch zyklische Imide entstehen, die ebenfalls als Kaltfließverbesserer für Mineralöle im Sinne dieser Erfindung geeignet sind.

Die Copolymere des Bestandteils ii) können verschiedene Einheiten der Formel (4) enthalten. Ferner können sie neben den Strukturelementen der Formel (4) weitere Comonomere wie Vinylester der Formel (1), kürzerkettige (Meth)acrylsäureester der Formel (2), Alkylvinylether der Formel (3) und/oder Alkene umfassen. Bevorzugte Vinylester entsprechen der für Formel (1) gegebenen Bedeutung. Besonders bevorzugt ist Vinylacetat. Bevorzugte Alkene sind α-Olefine, das heißt lineare Olefine mit endständiger Doppelbindung, vorzugsweise mit Kettenlängen von 3 bis 50, besonders bevorzugt mit 6 bis 36, insbesondere mit 10 bis 30 und speziell mit 18 bis 24 C-Atomen wie beispielsweise mit 3 bis 36, mit 3 bis 30 , mit 3 bis 24, mit 6 bis 50, mit 6 bis 30, mit 6 bis 24, mit 10 bis 50, mit 10 bis 36, mit 10 bis 24, mit 18 bis 50, mit 18 bis 36 oder mit 18 bis 30 C-Atomen. Beispiele geeigneter α-Olefine sind Propen, 1-Buten, iso-Buten, 1-Octen, 1-Nonen, 1-Decen, 1-Dodecen, 1-Tridecen, 1-Tetradecen, 1-Pentadecen, 1-Hexadecen, 1-Heptadecen, 1-Octadecen, 1-Nonadecen, 1-Eicosen, 1-Henicosen, 1-Docosen, 1-Tetracosen. Ebenfalls geeignet sind kommerziell erhältliche Kettenschnitte, wie beispielsweise C₁₃₋₁₈-α-Olefine, C₁₂₋₁₆-α-Olefine, C₁₄₋₁₆-α-Olefine, C₁₄₋₁₈-α-Olefine, C₁₆₋₁₈-α-Olefine, C₁₆₋₂₀-α-Olefine, C₂₂₋₂₈-α-Olefine, C₃₀₊-α-Olefine.

Weiterhin sind insbesondere Heteroatome tragende ethylenisch ungesättigte Verbindungen wie beispielsweise Allylpolyglykole, Acrylsäurebenzylester, Hydroxyethylacrylat, Hydroxypropylacrylat, Hydroxybutylacrylat, Dimethylaminoethylacrylat, Perfluoralkylacrylat, sowie die entsprechenden Ester und Amide der Methacrylsäure, Vinylpyridin, Vinylpyrrolidon, Acrylsäure, Methacrylsäure, p-Acetoxystyrol, und Methoxyessigsäurevinylester als Comonomere in Bestandteil ii) geeignet. Bevorzugt liegt ihr Anteil am Polymer unterhalb 20 mol-%, insbesondere zwischen 1 und 15 mol-% wie beispielsweise zwischen 2 und 10 mol-%.

Als Comonomere geeignete Allylpolyglykole können in einer bevorzugten Ausführungsformen der Erfindung 1 bis 50 Ethoxy- oder Propoxy-Einheiten umfassen, und der Formel (5) entsprechen: 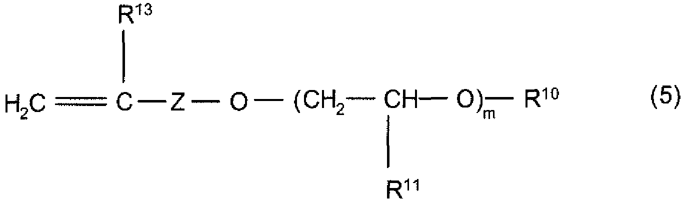 worin
- R¹³: für Wasserstoff oder Methyl steht,
- Z: für C₁-C₃-Alkyl steht,
- R¹⁰: für Wasserstoff, C₁-C₃₀-Alkyl, Cycloalkyl, Aryl oder -C(O)-R¹² steht,
- R¹¹: für Wasserstoff oder C₁-C₂₀-Alkyl steht,
- R¹²: für C₁-C₃₀-Alkyl, C₃-C₃₀-Alkenyl, Cycloalkyl oder Aryl steht und
- m: eine Zahl von 1 bis 50, vorzugsweise 1 bis 30 bedeutet.

Besonders bevorzugt sind Comonomere der Formel 5, bei denen R¹³ und R¹¹ für Wasserstoff und R¹⁰ für Wasserstoff oder C₁-C₄-Alkylgruppen stehen.

Bevorzugte Copolymere ii) enthalten mindestens 10 mol-%, besonders bevorzugt 20 bis 95 mol-%, insbesondere 30 bis 80 mol-% und speziell 40 bis 60 mol-% wie beispielsweise 10 bis 95 mol-%, 10 bis 80 mol-%, 10 bis 60 mol-%, 20 bis 80 mol-%, 20 bis 60 mol-%, 30 bis 95 mol-%, 30 bis 60 mol-%, 40 bis 95 mol-% oder 40 bis 80 mol-% von mindestens einer Struktureinheit der Formel (4). In einer speziellen Ausführungsform sind die Kaltfließverbesserer ii)Homopolymere aus Struktureinheiten der Formel (4).

Bevorzugte Homo- oder Copolymere von C₁₀-C₃₀-Alkylreste tragenden Estern ethylenisch ungesättigter Carbonsäuren ii) sind beispielsweise Poly(alkylacrylate), Poly(alkylmethacrylate), Copolymere von Alkyl(meth)acrylaten mit Vinylpyridin, Copolymere von Alkyl(meth)acrylaten mit Allylpolyglykolen, veresterte Copolymere von Alkyl(meth)acrylaten mit Maleinsäureanhydrid, Copolymere von veresterten ethylenisch ungesättigten Dicarbonsäuren wie beispielsweise Malein- bzw. Fumarsäuredialkylestern mit α-Ofefinen, Copolymere von veresterten ethylenisch ungesättigten Dicarbonsäuren wie beispielsweise Malein- bzw. Fumarsäuredialkylestern mit ungesättigten Vinylestern wie beispielsweise Vinylacetat wie auch Copolymere von veresterten ethylenisch ungesättigten Dicarbonsäuren wie beispielsweise Malein- bzw. Fumarsäuredialkylestern mit Styrol sowie die entsprechend Amid- anstatt Estergruppen tragenden Polymere. In einer bevorzugten Ausführungsform enthalten die erfindungsgemäßen Copolymere ii) keine basisch reagierenden und insbesondere keine stickstoffhaltigen Comonomere.

Die Molekulargewichte bzw. Molmassenverteilungen bevorzugter Copolymere ii) sind durch einen K-Wert (gemessen nach Fikentscher in 5 %iger Lösung in Toluol) von 10 bis 100, vorzugsweise 15 bis 80 charakterisiert. Die mittels Gel-Permeations-Chromatographie GPC gegen Poly(styrol)-Standards bestimmten mittleren Molekulargewichte Mw bevorzugter Copolymere ii) liegen in einem Bereich von 5.000 bis 1.000.000, bevorzugt von 10.000 bis 300.000 und speziell von 25.000 bis 100.000 Dalton wie beispielsweise im Bereich von 5.000 bis 300.000, von 5.000 bis 100.000, von 10.000 bis 1.000.000, von 10.000 bis 100.000, von 25.000 bis 1.000.000 oder von 25.000 bis 300.000 Dalton.

Die Herstellung der Copolymere ii) erfolgt üblicherweise durch (Co)polymerisation von Estern und/oder Amiden ethylenisch ungesättigter Carbonsäuren, insbesondere Alkylacrylaten und/oder Alkylmethacrylaten, gegebenenfalls mit weiteren Comonomeren, nach üblichen radikalischen Polymerisationsverfahren.

Ein geeignetes Herstellungsverfahren zur Herstellung der Kaltfließverbesserer ii) besteht darin, die Monomeren in einem organischen Lösungsmittel zu lösen und in Gegenwart eines Radikalkettenstarters bei Temperaturen im Bereich von 30 bis 150 °C zu polymerisieren. Als Lösungsmittel eignen sich bevorzugt aromatische Kohlenwasserstoffe, wie z. B. Toluol, Xylol, Trimethylbenzol, Dimethylnaphthalin oder Gemische dieser aromatischen Kohlenwasserstoffe. Auch handelsübliche Gemische aus aromatischen Kohlenwasserstoffe wie z.B. Solvent Naphtha oder Shellsol AB® finden Verwendung. Als Lösungsmittel sind ebenfalls aliphatische Kohlenwasserstoffe geeignet. Auch alkoxylierte aliphatische Alkohole oder deren Ester wie z. B. Butylglykol finden als Lösungsmittel Verwendung, bevorzugt aber als Gemisch mit aromatischen Kohlenwasserstoffen. In speziellen Fällen ist auch eine lösemittelfreie Polymerisation zur Herstellung der Kaltfließverbesserer ii) möglich.

Als Radikalstarter werden üblicherweise gebräuchliche Starter wie Azo-bisisobutyronitril, Ester von Peroxycarbonsäuren wie z. B. t-Butyl-perpivalat und t-Butyl-per-2-ethylhexanoat oder Dibenzoylperoxid verwendet.

Eine weitere Möglichkeit zur Herstellung der Kaltfließverbesserer ii) besteht in der polymeranalogen Veresterung, Umesterung, Amidierung oder Aminolyse von bereits polymerisierten ethylenisch ungesättigten Carbonsäuren, deren Estern mit kurzkettigen Alkoholen oder deren reaktiven Equivalenten wie beispielsweise Säureanhydriden mit Fettalkoholen und/oder Fettaminen mit 10 bis 30 C-Atomen. So führt beispielsweise die Umesterung von Poly(meth)acrylsäure mit Fettalkoholen oder die Veresterung von Polymeren aus Maleinsäureanhydrid und α-Olefinen mit Fettalkoholen zu erfindungsgemäß geeigneten Kaltfließverbesserern ii). Bei der Umsetzung von Polymeren aus Maleinsäureanhydrid und α-Olefinen mit primären Fettaminen können dabei in Abhängigkeit von den Reaktionsbedingungen Amide oder Imide hergestellt werden. In einer bevorzugten Ausführungsform erfolgt die Umsetzung der Anhydrideinheiten mit mehr als einem aber weniger als zwei Equivalenten Alkohol, so dass freie Carboxylgruppen am Polymer entstehen. Bevorzugte Partialester und Partialamide haben Säurezahlen zwischen 19 und 100 mg KOH/g und speziell zwischen 25 und 70 mg KOH/g wie beispielsweise zwischen 19 und 70 mg KOH/g oder zwischen 25 und 100 mg KOH/g.

Geeignete, mit ethylenisch ungesättigten Estern gepfropfte Ethylen-Copolymere iii) sind beispielsweise solche, die
a) ein Ethylen-Copolymer umfassen, welches neben Ethylen 4 bis 20 mol-% und vorzugsweise 6 bis 18 mol-% mindestens eines Vinylesters, Acrylesters, Methacrylesters, Alkylvinylethers und/oder Alkens enthält, auf welches
b) ein Homo- oder Copolymer eines Esters einer α,ß-ungesättigten Carbonsäure mit einem C₆- bis C₃₀-Alkohol aufgepfropft ist.
Besonders bevorzugt sind Ethylen-Vinylester-Copolymere.

Im Allgemeinen handelt es sich bei dem als Pfropfgrundlage eingesetzten Ethylen-Copolymer a) um eines der als Kaltfließverbesserer i) beschriebenen Copolymere. Als Copolymer a) für die Pfropfung bevorzugte Ethylen-Copolymere sind insbesondere solche, die neben Ethylen 7,5 bis 15 mol-% Vinylacetat enthalten. Weiterhin besitzen bevorzugte Ethylen-Copolymere a) MFI₁₉₀-Werte zwischen 1 und 900 g/10 min und speziell zwischen 2 und 500 g/10 min wie beispielsweise zwischen 1 und 500 g/10 min oder 2 und 900 g/10 min. In einer bevorzugten Ausführungsform werden als Pfropfgrundlage Mischungen von Ethylen-Copolymere a) eingesetzt, die sich in mindestens einem Charakteristikum wie beispielsweise den enthaltenen Comonomeren, den Comonomergehalten, den Molekulargewichten und/oder den Verzweigungsgraden unterscheiden.

Die auf die Ethylen-Copolymere a) gepfropften (Co)polymere b) enthalten bevorzugt 40 bis 100 Gew.-% und insbesondere 50 bis 90 Gew.-% wie beispielsweise 40 bis 90 Gew.-% oder 50 bis 100 Gew.-% einer oder mehrerer Struktureinheiten, die sich von Acrylsäurealkylestern und/oder Methacrylsäurealkylestern ableiten. Bevorzugt tragen mindestens 10 mol-%, besonders bevorzugt 20 bis 100 mol-%, insbesondere 30 bis 90 mol-% und speziell 40 bis 70 mol-% wie beispielsweise 10 bis 100 mol-%, 10 bis 90 mol-%, 10 bis 70 mol-%, 20 bis 90 mol-%, 20 bis 70 mol-%, 30 bis 100 mol-%, 30 bis 90 mol-%, 40 bis 100 mol-% oder 40 bis 90 mol-% der aufgepfropften Struktureinheiten Alkylreste mit mindestens 12 C-Atomen. Besonders bevorzugt als Monomere sind (Meth)acrylsäurealkylester mit C₁₆- bis C₃₆-Alkylresten, insbesondere mit C₁₈- bis C₃₀-Alkylresten und speziell mit C₂₀- bis C₂₄-Alkylresten wie beispielsweise mit C₁₂- bis C₃₆-Alkylresten, mit C₁₂- bis C₃₀-Alkylresten, mit C₁₂- bis C₂₄-Alkylresten, mit C₁₆- bis C₃₀-Alkylresten, mit C₁₆- bis C₂₄-Alkylresten, mit C₁₈- bis C₃₆-Alkylresten oder mit C₁₈- bis C₂₄-Alkylresten.

Gegebenenfalls enthalten die aufgepfropften Polymere b) 0 bis 60 Gew.-%, bevorzugt 10 bis 50 Gew.-% einer oder mehrerer weiterer Struktureinheiten, die sich von weiteren ethylenisch ungesättigten Verbindungen ableiten. Geeignete weitere ethylenisch ungesättigte Verbindungen sind beispielsweise Vinylester von Carbonsäuren mit 1 bis 20 C-Atomen, mit 6 bis 40 C-Atomen, Vinylaromaten, Dicarbonsäuren sowie deren Anhydride und Ester mit C₁₀-C₃₀-Fettalkoholen, Acrylsäure, Methacrylsäure und insbesondere Heteroatome tragende ethylenisch ungesättigte Verbindungen wie beispielsweise Acrylsäurebenzylester, Hydroxyethylacrylat, Hydroxypropylacrylat, Hydroxybutylacrylat, p-Acetoxystyrol, Methoxyessigsäurevinylester, Dimethylaminoethylacrylat, Perfluoralkylacrylat, die Isomere des Vinylpyridins und seiner Derivate, N-Vinylpyrrolidon sowie (Meth)acrylamid und seine Derivate wie N-Alkyl(meth)acrylamide mit C₁-C₂₀-Alkylresten. Auch Allylpolyglykole der Formel (5) sind als weitere ethylenisch ungesättigte Verbindungen geeignet.

Die Pfropfpolymere ii) enthalten gewöhnlich Ethylen-Copolymer a) und Homooder Copolymer eines Esters einer α,ß-ungesättigten Carbonsäure mit einem C₆- bis C₃₀-Alkohol b) im Gewichtsverhältnis von 1 :10 bis 10:1, bevorzugt von 1 : 8 bis 5 : 1 und speziell von 1 : 5 bis 1:1 wie beispielsweise von 1 : 10 bis 5 : 1, von 1 : 10 bis 1 : 1, von 1 : 8 bis 10 : 1, von 1 : 8 bis 1 : 1, von 1 : 5 bis 10 : 1 oder von 1 : 5 bis 5 : 1.

Die Herstellung von Pfropfpolymeren iii) erfolgt nach bekannten Verfahren. So sind die Pfropfpolymerisate iii) beispielsweise durch Mischen von Ethylen-Copolymer a) und Comonomer bzw. Comonomermischung b) gegebenenfalls in Gegenwart eines organischen Lösemittel und Zugabe eines Radikalkettenstarters zugänglich.

Als Homo- und Copolymere höherer Olefine (iv) sind Polymere von α-Olefinen mit 3 bis 30 C-Atomen geeignet. Diese können sich direkt von monoethylenisch ungesättigten Monomeren ableiten oder indirekt durch Hydrierung von Polymeren, die sich von mehrfach ungesättigten Monomeren wie Isopren oder Butadien ableiten, hergestellt werden. Bevorzugte Copolymere enthalten Struktureinheiten, die sich von α-Olefinen mit 3 bis 24 C-Atomen ableiten und Molekulargewichte von bis zu 120.000 g/mol aufweisen. Bevorzugte sind Propen, Buten, Isobuten, n-Hexen, Isohexen, n-Octen, Isoocten, n-Decen, Isodecen. Daneben können diese Polymere auch untergeordnete Mengen an von Ethylen abgeleiteten Struktureinheiten enthalten. Diese Copolymere können auch geringe Mengen, z. B. bis zu 10 mol-% weiterer Comonomere wie z.B. nicht endständige Olefine oder nicht konjugierte Olefine enthalten. Besonders bevorzugt sind Ethylen-Propylen-Copolymere. Weiterhin bevorzugt sind Copolymere verschiedener Olefine mit 5 bis 30 C-Atomen wie beispielsweise Poly(hexen-co-decen). Es kann sich dabei sowohl um statistisch aufgebaute Copolymere wie auch um Blockcopolymere handeln. Die Olefinhomo- und copolymere können nach bekannten Methoden hergestellt werden, z.B. mittels Ziegler- oder Metallocen-Katalysatoren.

Als Kondensationsprodukte (Harze) aus mindestens einen Alkylrest tragenden Phenolen und Aldehyden und/oder Ketonen v) eignen sich insbesondere solche Polymere, die Struktureinheiten umfassen, die mindestens eine phenolische, d. h. eine direkt an das aromatische System gebundene OH-Gruppe, sowie mindestens eine an das aromatische System gebundene Alkyl-, Alkenyl-, Alkylether- oder Alkylestergruppe aufweisen.

In einer bevorzugten Ausführungsform der Erfindung handelt es sich bei den Kaltfließverbesserern v) um Oligo- oder Polymere, die repetitive Struktureinheiten der Formel (6) 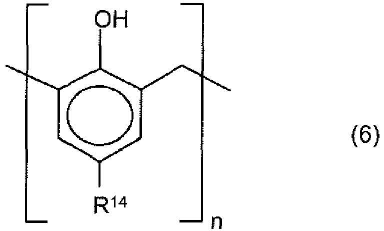 worin
- R¹⁴: für C₁- bis C₁₀₀-Alkyl, C₂- bis C₁₀₀-Alkenyl, O-C₁- bis O-C₁₀₀-Alkyl, O-C₂- bis O-C₁₀₀-Alkenyl, C(O)-O-C₁- bis C(O)-O-C₁₀₀-Alkyl, C(O)-O-C₂- bis C(O)-O-C₁₀₀-Alkenyl, O-C(O)-C₁- bis O-C(O)-C₁₀₀-Alkyl oder O-C(O)-C₂- bis O-C(O)-C₁₀₀-Alkenyl und
- n: für eine Zahl von 2 bis 250 steht,
enthalten.

Bevorzugt besitzen die Alkyl- und Alkenylreste der Harze aus Alkylrest tragenden Phenolen und Aldehyden und/oder Ketonen 2 bis 60, vorzugsweise 4 bis 50 und insbesondere 6 bis 36 Kohlenstoffatome wie beispielsweise 2 bis 50, 2 bis 36, 4 bis 60, 4 bis 36, 6 bis 60 oder 6 bis 50 Kohlenstoffatome. Die Alkylreste können linear oder verzweigt sein. Besonders bevorzugte Alkylreste mit mehr als 6 C-Atomen besitzen bevorzugt höchstens eine Verzweigung pro 3 C-Atome, besonders bevorzugt höchstens eine Verzweigung pro 4 C-Atome. In einer speziellen Ausführungsform sind sie linear. Beispiele für bevorzugte Alkylreste sind n-, iso- und tert.-Butyl-, n- und iso-Pentyl-, n- und iso-Hexyl-, n- und iso-Octyl-, n- und iso-Nonyl-, n- und iso-Decyl-, n- und iso-Dodecyl-, Tetradecyl-, Hexadecyl-, Octadecyl-, Tripropenyl-, Tetrapropenyl-, Poly(propenyl)- und Poly(isobutenyl)reste sowie von kommerziell erhältlichen Rohstoffen wie beispielsweise α-Olefin-Kettenschnitten oder Fettsäuren im Kettenlängenbereich von beispielsweise C₁₃₋₁₈, C₁₂₋₁₆, C₁₄₋₁₆, C₁₄₋₁₈, C₁₆₋₁₈, C₁₆₋₂₀, C₂₂₋₂₈ und C₃₀₊ abgeleiteten, im wesentlichen linearen Alkylreste.

Bevorzugt steht n für eine Zahl von 3 bis 100, besonders bevorzugt für eine Zahl von 5 bis 50 und speziell für eine Zahl von 10 bis 35 wie beispielsweise für eine Zahl von 2 bis 100, für eine Zahl von 2 bis 50, für eine Zahl von 2 bis 35, für eine Zahl von 3 bis 250, für eine Zahl von 3 bis 50, für eine Zahl von 3 bis 35, für eine Zahl von 5 bis 250, für eine Zahl von 5 bis 100, für eine Zahl von 5 bis 35, für eine Zahl von 10 bis 250, für eine Zahl von 10 bis 100 oder für eine Zahl von 10 bis 50.

Das Molekulargewicht der Kaltfließverbesserer v) kann in weiten Grenzen variieren. Voraussetzung für ihre erfindungsgemäße Eignung ist jedoch, dass sie zumindest in anwendungsrelevanten Konzentrationen von 0,001 bis 1 Gew.-% öllöslich sind. Vorzugsweise liegt das mittels Gelpermeationschromatographie (GPC) gegen Polystyrolstandards in THF gemessene gewichtsmittlere Molekulargewicht Mw zwischen 800 und 50.000 g/mol, besonders bevorzugt zwischen 1.500 und 30.000 g/mol und insbesondere zwischen 2.000 und 20.000 g/mol wie beispielsweise zwischen 800 und 30,000 g/mol, zwischen 800 und 20.000 g/mol, zwischen 1.500 und 50,000 g/mol, zwischen 1.500 und 30,000 g/mol, zwischen 2.000 und 50,000 g/mol oder zwischen 2.000 und 30.000 g/mol.

Geeignete Aldehyde für die Herstellung der Harze aus mindestens einen Alkylrest tragenden Phenolen und Aldehyden und/oder Ketonen v) sind solche mit 1 bis 12 Kohlenstoffatomen und vorzugsweise solche mit 1 bis 4 Kohlenstoffatomen wie beispielsweise Formaldehyd, Acetaldehyd, Propionaldehyd, Butyraldehyd, 2-Ethylhexanal, Benzaldehyd, Glyoxalsäure sowie deren reaktive Equivalente wie Formalin, Paraformaldehyd und Trioxan. Besonders bevorzugt ist Formaldehyd.

Die erfindungsgemäß geeigneten Harze aus einen Alkylrest tragenden Phenolen und Aldehyden und/oder Ketonen (v) sind nach bekannten Verfahren zugänglich, z. B. durch Kondensation der entsprechenden, einen Alkylrest tragenden Phenole mit Formaldehyd, d.h. mit 0,5 bis 1,5 Mol, bevorzugt 0,8 bis 1,2 Mol Formaldehyd pro Mol Alkylphenol wie beispielsweise 0,5 bis 1,2 Mol oder 0,8 bis 1,5 Mol Formaldehyd pro Mol Alkylphenol. Die Kondensation kann lösemittelfrei erfolgen, bevorzugt erfolgt sie jedoch in Gegenwart eines nicht oder nur teilweise wassermischbaren inerten organischen Lösemittels wie Mineralöle, Alkohole, Ether und ähnliches. Auch auf biogenen Rohstoffen wie Fettsäuremethylestern basierende Lösemittel sind als Reaktionsmedium geeignet.

Bevorzugt erfolgt die Kondensation im organischen, mit Wasser nicht mischbaren Lösemittel II). Besonders bevorzugt sind dabei Lösemittel, die mit Wasser Azeotrope bilden können. Als derartige Lösemittel werden insbesondere aromatische Kohlenwasserstoffe wie Toluol, Xylol, Diethylbenzol und höher siedende kommerzielle Lösemittelgemische wie Sheltsol® AB, und Solvent Naphtha eingesetzt. Die Kondensation erfolgt bevorzugt zwischen 70 und 200 °C wie beispielsweise zwischen 90 und 160 °C. Sie wird üblicherweise durch 0,05 bis 5 Gew.-% Basen oder bevorzugt Säuren katalysiert.

Bevorzugte Kondensationsprodukte v) leiten sich von sich Alkylreste tragenden Phenolen mit ein oder zwei Alkylresten in ortho- und/oder para-Position zur OH-Gruppe ab. Besonders bevorzugt als Ausgangsmaterialien sind Alkylreste tragende Phenole, die am Aromaten mindestens zwei zur Kondensation mit Aldehyden befähigte Wasserstoffatome tragen und insbesondere monosubstituierte Phenole, deren Alkylrest in der para-Stellung gebunden ist. Die Alkylreste können bei den erfindungsgemäß geeigneten Kondensationsprodukten aus Alkylreste tragenden Phenolen und Aldehyden gleich oder verschieden sein. Sie können gesättigt oder ungesättigt sein, bevorzugt sind sie gesättigt.

In einer bevorzugten Ausführungsform sind die Kondensationsprodukte aus den mindestens einen Alkylrest tragenden Phenolen und Aldehyden und/oder Ketonen (v) Alkylphenol-Aldehydharze. Alkylphenol-Aldehyd-Harze sind prinzipiell bekannt und beispielsweise im Römpp Chemie Lexikon, 9. Auflage, Thieme Verlag 1988-92, Band 4, S. 3351 ff. beschrieben. Besonders geeignete Alkylphenol-Aldehydharze v) leiten sich von Alkylphenolen mit linearen Alkylresten im Kettenlängenbereich von C₂₀ bis C₃₆ ab. Weitere besonders bevorzugte Alkylphenol-Aldehydharze v) leiten sich von Alkylphenolen mit verzweigten Alkylresten mit 8 und 9 C-Atomen ab.

In einer bevorzugten Ausführungsform werden die Kettenenden der Kondensationsprodukte aus mindestens einen Alkylrest tragenden Phenolen und Aldehyden und/oder Ketonen während oder nach der Kondensation modifiziert, beispielsweise durch Kondensation in Gegenwart ungesättigter Fettsäuren oder Fettsäurederivate oder durch nachfolgende Reaktion mit einem Amin in Gegenwart von weiterem mindestens einen Alkylrest tragenden Phenol und Aldehyd im Sinne einer Mannich-Reaktion.

Die verschiedenen Kaltfließverbesserer (i) bis (v) können alleine oder als Mischung verschiedener Kaltfließverbesserer einer oder mehrerer Gruppen eingesetzt werden. Bei Verwendung mehrerer Fließverbesserer einer Gruppe unterscheiden sich die Komponenten in mindestens einem Merkmal wie beispielsweise dem Molekulargewicht, dem Comonomergehalt oder der Art der Comonomere. Bei Verwendung von Fließverbesserern mehrerer Gruppen können die Komponenten beispielsweise aus den Gruppen (i) und (ii), (i) und (iii), (i) und (iv), (i) und (v), (ii) und (iii), (ii) und (iv), (ii) und (v), (iii) und (iv), (iii) und (v) oder (iv) und (v) ausgewählt sein. Bei Mischungen werden die einzelnen Komponenten üblicherweise mit einem Anteil von 5 bis 95 Gew.-% wie beispielsweise 20 bis 90 Gew.-% bezogen auf die Gesamtmenge an eingesetztem Kaltfließverbesserer (I) eingesetzt.

Bevorzugt enthalten die erfindungsgemäßen Dispersionen 5 bis 60 Gew.-% mindestens eines Kaltfließverbesserers (I), insbesondere 10 bis 50 Gew.-% und speziell 15 bis 40 Gew.-% wie beispielsweise 5 bis 50 Gew.-%, 5 bis 40 Gew.-%, 10 bis 60 Gew.-%, 10 bis 40 Gew.-%, 15 bis 60 Gew.-% oder 15 bis 50 Gew.-%.

Zur Steigerung der Wirksamkeit hat es sich oftmals bewährt, den Kaltfließverbesserer (I) in einem nicht mit Wasser mischbaren organischen Lösemittel (II) zu verdünnen. Kaltfließverbesserer (I) und nicht mit Wasser mischbares organisches Lösemittel (II) werden dabei bevorzugt im Gewichtsverhältnis (I) zu (II) von 1:5 bis 5:1, bevorzugt 1:3 bis 3:1 und speziell 1:2 bis 2:1 wie beispielsweise 1:5 bis 3:1, 1:5 bis 2:1, 1:3 bis 5:1, 1:3 bis 2:1 oder 1:2 bis 5:1 oder 1:2 bis 3:1 eingesetzt. Der Anteil des nicht mit Wasser mischbaren organischen Lösemittels (II) an den erfindungsgemäßen Dispersionen liegt bevorzugt zwischen 5 und 50 Gew.-% und insbesondere zwischen 8 und 40 Gew.-% und speziell zwischen 10 und 30 Gew.-% wie beispielsweise zwischen 5 und 40 Gew.-%, zwischen 5 und 30 Gew.-%, zwischen 8 und 50 Gew.-%, zwischen 8 und 30 Gew.-%, zwischen 10 und 50 Gew.-% oder zwischen 10 und 40 Gew.-%.

Als nicht mit Wasser mischbare Lösemittel (II) haben sich aliphatische, aromatische und alkylaromatische Kohlenwasserstoffe und deren Mischungen besonders bewährt. In diesen Lösemitteln sind die erfindungsgemäß einsetzbaren Kaltfließverbesserer (I) bei Temperaturen oberhalb 50 °C zumindest 20 Gew.-%ig und oftmals auch vollständig löslich. Bevorzugte Lösemittel enthalten keine polaren Gruppen im Molekül. Bevorzugte Lösemittel weisen Siedepunkte auf, die einen möglichst geringen apparativen Aufwand bei der für die Herstellung der erfindungsgemäßen Dispersionen erforderlichen Temperatur von 60 °C und mehr erlauben, d. h. sie sollen Siedepunkte von mindestens 60 °C und vorzugsweise von 80 bis 200 °C unter Normalbedingungen aufweisen. Beispiele für geeignete Lösemittel sind: Dekan, Toluol, Xylol, Diethylbenzol, Naphthalin, Tetralin, Dekalin, und kommerzielle Lösemittelgemische wie Shellsol®-, Exxsol®, Isopar®-, Solvesso®-Typen, Solvent Naphtha und/oder Kerosin. In bevorzugter Ausführungsform umfassen die mit Wasser nicht mischbaren Lösemittel mindestens 10 Gew.-%, bevorzugt 20 bis 100 Gew.-% und speziell 30 bis 90 Gew.-% wie beispielsweise 10 bis 100 Gew.-%, 10 bis 90 Gew.-%, 20 bis 90 Gew.-% oder 30 bis 100 Gew.-% an aromatischen Bestandteilen. Diese Lösemittel können auch für die Herstellung der erfindungsgemäß eingesetzten Kaltfließverbesserer eingesetzt werden.

Unter Ethercarbonsäuren und deren Salzen (IIIi) werden organische Carbonsäuren und deren Salze verstanden, die neben der Carboxylfunktion eine oder mehrere Etherbrücken tragen. Für die Herstellung des Dispergiermittels III) bevorzugte Ethercarbonsäuren entsprechen der allgemeinen Formel (7)

R¹⁵-(O-CₓH₂ₓ)_{y}-OCH₂COOH (7)

worin
- R¹⁵: für eine lineare oder verzweigte Alkyl- oder Alkenylgruppe mit 4 bis 24 Kohlenstoffatomen, eine Alkylarylgruppe, deren Alkylrest 1 bis 24 C-Atome besitzt oder eine Arylgruppe,
- x: für die Zahl 2 und/oder 3 und
- y: für eine Zahl von 0 bis 20 steht.

Bevorzugte Alkylreste R¹⁵ haben 6 bis 20 C-Atome und insbesondere 8 bis 18 C-Atome wie beispielsweise 4 bis 20 C-Atome, 4 bis 18 C-Atome, 6 bis 24 C-Atome, 6 bis 18 C-Atome, 8 bis 14 C-Atome oder 8 bis 20 C-Atome. Beispiele für besonders bevorzugte Alkylreste sind Nonyl-, Isononyl-, Decyl-, iso-Decyl-, Tridecyl-, iso-Tridecyl-, Hexadecyl und Octadecylreste. Bevorzugte Arylreste R¹⁵ haben 6 bis 12 Kohlenstoffatome und 1 oder zwei Ringsysteme wie beispielsweise der Phenylrest. In bevorzugten Alkylarylgruppen R¹⁵ sind die Arylgruppen mono- oder bizyklisch und besitzen 6 bis 12 C-Atome. Alkylarylgruppen R¹⁵ tragen mindestens einen linearen oder verzweigten Alkylrest mit 1 bis 24 C-Atomen, bevorzugt mit 4 bis 20 C-Atomen und speziell mit 6 bis 18 C-Atomen wie beispielsweise mit 1 bis 20 C-Atomen, mit 1 bis 18 C-Atomen, mit 4 bis 24 C-Atomen, mit 4 bis 18 C-Atomen, mit 6 bis 24 C-Atomen oder mit 6 bis 20 C-Atomen.

Methoden zur Herstellung von Ethercarbonsäuren der Formel (7) sind dem Fachmann geläufig. Gängige Herstellverfahren sind beispielsweise die Alkylierung von Alkohol- und speziell Fettalkoholoxethylaten oder -oxpropylaten mit Chloressigsäurederivaten wie beispielsweise Chloressigsäure (Williamsonsche Ethersynthese) sowie die Oxidation der oben genannten Ausgangsprodukte mit verschiedenen Oxidationsmitteln (Luftsauerstoff, Hypochlorit, Chlorit) unter Katalyse mit verschiedenen Katalysatoren.

Eine erste Methode zur Herstellung von Ethercarbonsäuren der Formel (7) besteht in der Alkylierung von alkoxylierten Fettalkoholen durch Williamson-Synthese. Dazu wird ein Fettalkohol der Formel R¹⁵-OH zuerst unter Einsatz nichtkatalytischer Mengen an Alkali (NaOH, KOH, Alkoholate über 5 mol-%) mit Alkylenoxiden, bevorzugt mit Ethylenoxid und/oder Propylenoxid zu einem Polyalkoxyalkohol bzw. Fettalkoholalkoxylat der allgemeinen Formel (8)

R¹⁵-(O-CₓH₂ₓ)_{y}-OCH₂CH₂OH (8)

in der R¹⁵, x und y wie oben definiert sind, umgesetzt. Die resultierenden Reaktionsmischungen, die aus einem Gemisch von oxethylierten Alkoholen und Alkoholaten verschiedener Polyalkylenglykolether bestehen, werden anschließend in einer Williamson-Synthese mit einem Chloressigsäurederivat wie beispielsweise Natriumchloracetat in das entsprechende Ethercarbonsäurederivat überführt. In vielen Fällen hat es sich bewährt, Fettalkoholethoxylate mit einer narrow-range-Verteilung zur Herstellung der Ethercarbonsäure einzusetzen, die ein vorteilhaftes Eigenschaftsprofil und insbesondere eine bessere Löslichkeit besitzen.

Gemäß einer weiteren Methode können Ethercarbonsäuren der Formel (7) zum Beispiel gemäß EP 0304763 durch Oxidation von Polyalkoxyalkoholen bzw. Fettalkoholalkoxylaten der Formel (8) in flüssiger, insbesondere wässrigalkalischer Phase mit Sauerstoff bzw. Sauerstoff enthaltenden Gasen in Gegenwart von wirksamen Mengen eines Katalysators aus Edelmetallen der Nebengruppe VIII des Periodensystems bzw. Verbindungen dieser Edelmetalle sowie gegebenenfalls eines Katalysator/Aktivators hergestellt werden.

Erfindungsgemäß werden die Ethercarbonsäuren in Form ihrer Salze (IIIi) eingesetzt. Dabei handelt es sich bevorzugt um Alkali-, Erdalkali- und Ammoniumsalze. Diese lassen sich durch Umsetzung von Ethercarbonsäuren der Formel (7) mit Basen der Alkali- und Erdalkalimetalle bzw. mit Aminen herstellen. Bevorzugte Alkali- und Erdalkalisalze sind die Hydroxide und Carbonate wie beispielsweise NaOH, KOH, Mg(OH)₂, Na₂CO₃, K₂CO₃ und MgCO₃. Bevorzugte Ammoniumsalze leiten sich von Ammoniak, primären, sekundären und tertiären Aminen ab.

Bevorzugte primäre, sekundäre und tertiäre Amine zur Herstellung erfindungsgemäß bevorzugter Salze (IIIi) tragen mindestens einen C₁- bis C₁₀-Akylrest wie beispielsweise einen Methyl, Ethyl-, Propyl-, Butyl-, Pentyl-, Hexyl- oder Octytrest. Alkylreste mit 3 und mehr C-Atomen können linear oder verzweigt sein.

Besonders bevorzugte primäre, sekundäre und tertiäre Amine zur Herstellung erfindungsgemäß bevorzugter Salze (IIIi) tragen mindestens einen mit einer Hydroxylgruppe substituierten Alkylrest. Bevorzugte Amine entsprechen der Formel (9)

NR¹⁶R¹⁷R¹⁸ (9)

worin
- R¹⁶: für einen mindestens eine Hydroxylgruppe tragenden Kohlenwasserstoffrest mit 1 bis 10 Kohlenstoffatomen und
- R¹⁷, R¹⁸: unabhängig voneinander für Wasserstoff, einen gegebenenfalls substituierten Kohlenwasserstoffrest mit 1 bis 50 C-Atomen und insbesondere für C₁- bis C₂₀-Alkyl, für C₃- bis C₂₀-Alkenyl, für C₆- bis C₂₀-Aryl oder für R¹⁶ stehen.

R¹⁶ steht bevorzugt für einen mindestens eine Hydroxylgruppe tragenden linearen oder verzweigten Alkylrest. R¹⁶ kann eine oder mehrere wie beispielsweise zwei, drei oder mehr Hydroxylgruppen tragen. Für den Fall, dass auch R¹⁷ und/oder R¹⁸ für R¹⁶ stehen, sind Amine der Formel (9) bevorzugt, die insgesamt höchstens 5 und insbesondere 1, 2 oder 3 Hydroxylgruppen tragen.
In einer bevorzugten Ausführungsform steht R¹⁶ für eine Gruppe der Formel (10)

-(B-O)ₚ-R¹⁹ (10)

worin
- B: für einen Alkylenrest mit 2 bis 6 C-Atomen, bevorzugt mit 2 oder 3 C-Atomen,
- p: für eine Zahl von 1 bis 50,
- R¹⁹: für Wasserstoff, einen Kohlenwasserstoffrest mit 1 bis 50 C-Atomen, insbesondere C₁- bis C₂₀-Alkyl, C₂- bis C₂₀-Alkenyl, C₆- bis C₂₀-Aryl oder -B-NH₂ stehen.

Besonders bevorzugt steht B für einen Alkylenrest mit 2 bis 5 C-Atomen und insbesondere für eine Gruppe der Formel -CH₂-CH₂- und/oder -CH(CH₃) -CH₂-.

Bevorzugt steht p für eine Zahl zwischen 2 und 20 und insbesondere für eine Zahl zwischen 3 und 10 wie beispielsweise für eine Zahl zwischen 2 und 10 oder zwischen 3 und 20. In einer weiteren besonders bevorzugten Ausführungsform steht p für 1 oder 2. Bei Alkoxyketten mit p ≥ 3 und insbesondere mit p ≥ 5 kann es sich um eine Blockpolymerkette handeln, die alternierende Blöcke verschiedener Alkoxyeinheiten, vorzugsweise Ethoxy- und Propoxyeinheiten aufweist. Besonders bevorzugt ist -(B-O)ₚ- ein Homopolymer.

Besonders geeignet sind Alkanolamine, in denen R¹⁶ und R¹⁷ unabhängig voneinander für eine Gruppe der Formel -(B-O)ₚ-H und R¹⁸ für H stehen, in der die Bedeutungen für B und p in R¹⁶ und R¹⁷ gleich oder verschieden sein können. Insbesondere sind die Bedeutungen für R¹⁶ und R¹⁷ dabei gleich.

In einer weiteren besonders bevorzugten Ausführungsform stehen R¹⁶, R¹⁷ und R¹⁸ unabhängig voneinander für eine Gruppe der Formel -(B-O)ₚ-H, in der die Bedeutungen für B und p in R¹⁶, R¹⁷ und R¹⁸ gleich oder verschieden seien können. Insbesondere sind die Bedeutungen für R¹⁶, R¹⁷ und R¹⁸ dabei gleich.

Beispiele für geeignete Alkylamine sind Methylamin, Ethylamin, Propylamin, n-Butylamin, tert.-Butylamin, Dimethylamin, Diethylamin, Dipropylamin, Methylethylamin, Trimethylamin und Triethylamin. Beispiele für geeignete Alkanolamine sind Aminoethanol, 3-Amino-1-propanol, Isopropanolamin, N-Butyldiethanolamin, N,N-Diethylaminoethanol, N,N-Dimethylisopropanolamin, 2-(2-Aminoethoxy)ethanol, 2-Amino-2-methyl-1-propanol, 3-Amino-2,2-dimethyl-1-propanol, 2-Amino-2-hydroxymethyl-1,3-propandiol, Diethanolamin, Dipropanolamin, Diisopropanolamin, Di(diethylenglykol)amin, N-Butyldiethanolamin, Triethanolamin, Tripropanolamin, Tri(isopropanol)amin, Tris(2-hydroxypropylamin), Aminoethylethanolamin sowie Poly(ether)amine wie Poly(ethylenglykol)amin und Poly(propylenglykol)amin mit jeweils 4 bis 50 Alkylenoxideinheiten.

Weitere als erfindungsgemäße Amine geeignete Verbindungen sind heterozyklische Verbindungen, welche einen Cyclus mit 5 bis 7 Ringgliedern umfassen, der neben einem Stickstoffatom ein Sauerstoffatom umfasst, und der am Stickstoffatom einen Alkylrest mit 1 bis 4 C-Atomen oder eine Gruppe der Formel (10) trägt,

-(B-O)ₚ-R¹⁹ (10)

worin
- B: für einen Alkylenrest mit 2 oder 3 C-Atomen, und
- p: für 1 oder 2, und
- R¹⁹: für Wasserstoff oder eine Gruppe der Formel -B-NH₂ steht.

So wurden beispielsweise Morpholin sowie seine N-Alkoxyalkylderivate wie beispielsweise 2-(2-Morpholin-4-yl-ethoxy)-ethanol und 2-(2-Morpholin-4-yl-ethoxy)-ethylamin erfolgreich zur Herstellung der erfindungsgemäßen Dispersionen eingesetzt.

Die Salze von Ethercarbonsäuren (IIIi) lassen sich durch Umsetzung einer Ethercarbonsäure mit einem entsprechenden basischen Alkali- oder Erdalkalisalz oder einem Amin herstellen. Die Herstellung der Ethercarbonsäuresalze (IIIi) kann dabei in einem vorgelagerten Reaktionsschritt oder bevorzugt durch Zugabe von Ethercarbonsäure und Base zum Dispersionsansatz erfolgen. Basisches Alkali-oder Erdalkalisalz und Ethercarbonsäure werden dazu bevorzugt equimolar eingesetzt, das heißt in einem Molverhältnis zwischen 1,2 : 1 und 1 : 1,2 mol/mol, besonders bevorzugt 1,1 : 1,1 mol/mol und speziell 1 : 1 mol/mol. Amin und Ethercarbonsäure werden bezogen auf den Gehalt an Säuregruppen einerseits und Aminogruppen andererseits bevorzugt im molaren Verhältnis von 10 : 1 bis 1 : 10, bevorzugt von 5 : 1 bis 1 : 5, speziell von 1 : 2 bis 2 : 1 wie beispielsweise im Verhältnis von 1,2 : 1 bis 1 : 1,2 eingesetzt. In einer besonders bevorzugten Ausführungsform werden Amin und Ethercarbonsäure bezogen auf den Gehalt an Säuregruppen einerseits und Aminogruppen andererseits equimolar eingesetzt.

In einer weiteren bevorzugten Ausführungsform wird das basische Alkali- oder Erdalkalisalz oder Amin in einer Menge eingesetzt, so dass die damit hergestellte erfindungsgemäße Dispersion einen pH-Wert oberhalb 6,0, bevorzugt zwischen 6,5 und 12,0, besonders bevorzugt zwischen 7,0 und 11,0 und speziell zwischen 7,2 und 10,0 wie beispielsweise oberhalb 6,5, oberhalb 7,0, oberhalb 7,2, zwischen 6,0 und 12,0, zwischen 6,0 und 11,0, zwischen 6,0 und 10,0, zwischen 7,0 und 12,0, zwischen 7,0 und 10,0, zwischen 7,2 und 12,0 oder zwischen 7,2 und 11,0 aufweist.

Zur besseren Handhabbarkeit der Ethercarbonsäuresalze (IIIi) hat es sich bewährt, höher schmelzende Salze als Lösung oder Dispersion in Wasser und/oder dem mit Wasser mischbaren Lösemittel (V) und/oder in Abmischung mit dem nichtionischen Tensid (IIIii) einzusetzen.

Als Dispergiermittel IIIii) bevorzugte nichtionische Tenside besitzen einen unpolaren und einen polaren Molekülteil, wobei der polare Teil keine dissoziierbaren funktionellen Gruppen enthält und sich daher im Wasser nicht in Ionen auftrennt. Der unpolare Teil basiert bevorzugt auf einem Fettalkohol, einer Fettsäure oder einem Alkylphenol; die polaren Gruppen sind bevorzugt die Hydroxygruppe und die Ethergruppe.

Bevorzugte nichtionische Tenside (IIIii) sind beispielsweise 10 bis 80-fach, vorzugsweise 20 bis 50-fach ethoxylierte C₈- bis C₂₀-Alkanole, C₈- bis C₁₂-Alkylphenole, C₈- bis C₂₀-Fettsäuren und C₈- bis C₂₀-Fettsäureamide. Weitere geeignete Beispiele für nichtionische Tenside sind Poly(alkylenoxide) in Form von Blockcopolymeren verschiedener Alkylenoxide wie Ethylenoxid und Propylenoxid sowie Partialester und Amide von Polyolen bzw. Alkanolaminen mit Fettsäuren wie beispielsweise Alkylpolyglucoside und N-acylierte N-Alkylglucamide.

Bestimmte Materialien, die normalerweise als nichtionische Tenside charakterisiert sind, können eine strukturelle Ähnlichkeit mit bestimmten der erfindungsgemäß geeigneten organischen, mit Wasser mischbaren Lösemittel (V) aufweisen. Sollte eine Unterscheidung zwischen diesen Komponenten erforderlich sein, so kann ein Material als nichtionisches Tensid für die Zwecke dieser Erfindung klassifiziert werden, wenn es die Eigenschaften eines nichtionischen Tensids (z. B. Grenzflächenaktivität) aufweist und ferner bei Raumtemperatur, vorzugsweise bei 30 °C und speziell bei 40 °C ein Feststoff ist. Materialien, die bei diesen Temperaturen, insbesondere bei Raumtemperatur und darunter, Flüssigkeiten sind, können als Bestandteil des organischen, mit Wasser mischbaren Lösemittels (V) klassifiziert werden.

Besonders bevorzugte Partialester von Polyolen umfassen Fettsäureester von Polyolen mit drei oder mehr und insbesondere mit 3 bis 12 und speziell mit 4 bis 6 Hydroxylgruppen wie beispielsweise Polyole mit mehr als vier Hydroxylgruppen, mit 3 bis 6 Hydroxylgruppen oder 4 bis 12 Hydroxylgruppen. Beispiele für besonders bevorzugte Polyole sind Glycerin, Polyglycerin mit einem Oligomerisierungsgrad von 2 bis 10 und insbesondere 2 bis 5 und Zucker wie beispielsweise Sorbitan sowie deren Umsetzungsprodukte mit 1 bis 20 mol mindestens eines Alkylenoxids pro OH-Gruppe. Bevorzugte Alkylenoxide haben 2 bis 6 Kohlenstoffatome wie beispielsweise Ethylenoxid, Propylenoxid und deren Mischungen. Polyole mit 5 oder mehr Kohlenstoffatomen können in offenkettiger oder zyklischer Form wie beispielsweise einer Furanose- oder Pyranose-Form vorliegen. Unter Partialestern werden Ester eines Polyols mit einer Fettsäure verstanden, in denen mindestens eine Hydroxylgruppe des Polyols mit einer Fettsäure verestert und mindestens eine Hydroxylgruppe frei ist. Für die Herstellung der Partialester bevorzugt eingesetzte Fettsäuren entsprechen der Formel R²⁰-COOH, wobei R²⁰ für einen aliphatischen Kohlenwasserstoffrest mit 5 bis 29 C-Atomen steht und bevorzugt die weiter unten gegebenen Bedeutung besitzt. Beispiele für geeignete Partialester von Polyolen als nichtionische Tenside (IIIii) sind Glycerinmonococoat, Glycerinmonostearat, Glycerinmonooleat, Glycerindioleat, Sorbitanmonolaurat, Sorbitanmonopalmitat, Sorbitanmonostearat, Sorbitanmonooleat, Sorbitansesquioleat, Sorbitandioleat und deren Mischungen.

Besonders bevorzugte N-acylierte N-Alkylglucamide umfassen Verbindungen mit einer offenkettigen Kopfgruppe der Formel (11) wie auch solche mit einer zyklischen Kopfgruppe der Formeln (12) - (14) 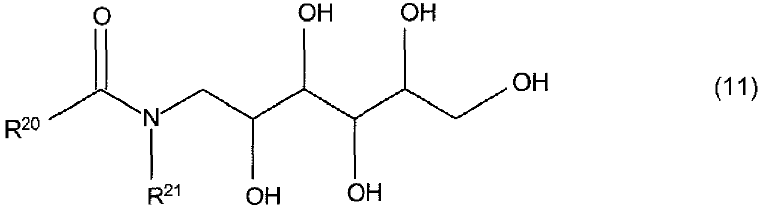 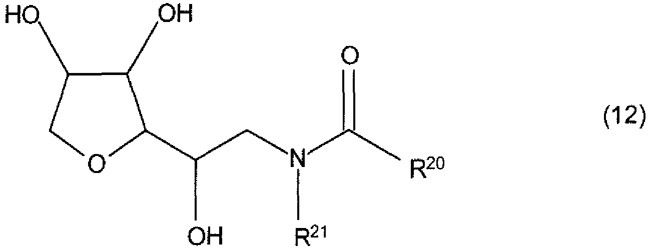 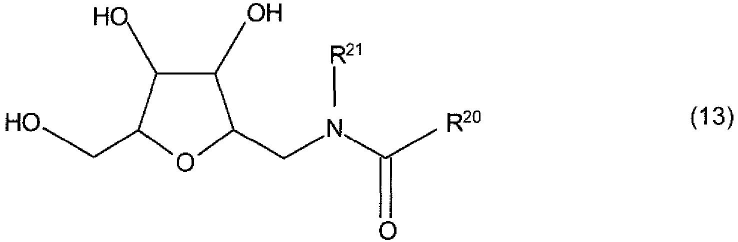 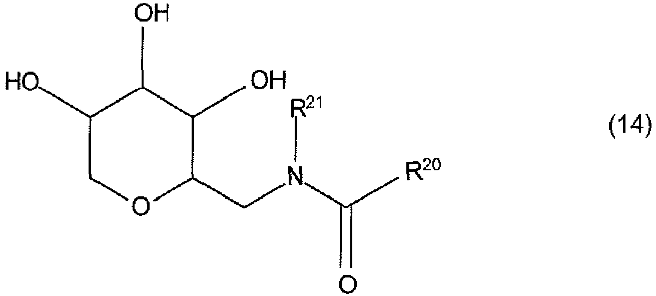 worin
- R²⁰: für einen aliphatischen Kohlenwasserstoffrest mit 5 bis 29 C-Atomen und
- R²¹: für einen aliphatischen Kohlenwasserstoffrest mit 1 bis 6 C-Atomen, vorzugsweise Methyl, stehen.

In einer bevorzugten Ausführungsform steht R²⁰ für einen gesättigten oder ungesättigten Alkylrest. Bevorzugt sind diese Reste linear oder verzweigt. Weiterhin bevorzugt besitzt R²⁰ 6 bis 23 C-Atome und speziell 7 bis 19 C-Atome wie beispielsweise 5 bis 23 C-Atome, 5 bis 19 C-Atome, 6 bis 29 C-Atome, 6 bis 19 C-Atome, 7 bis 29 C-Atome oder 7 bis 23 C-Atome. Beispiele für bevorzugte Reste R²⁰ sind der n-Octyl-, iso-Octyl-, n-Nonyl-, iso-Nonyl-, n-Decyl-, iso-Decyl-, Dodecyl-, iso-Tridecyl-, Talgfettalkyl- und Oleylrest sowie deren Mischungen. In einer weiteren bevorzugten Ausführungsform steht R²¹ für einen C₁- oder C₂-Rest und speziell für Methyl.

Die nichtionischen Tenside (IIIii) haben HLB-Werte (nach Griffin) oberhalb 7, insbesondere zwischen 8 und 20 und speziell zwischen 10 und 18 wie beispielsweise oberhalb 8, oberhalb 10, zwischen 7 und 20, zwischen 7 und 18, zwischen 8 und 18 oder zwischen 10 und 20. Bevorzugte nichtionische Tenside unterstützen die Bildung von Öl-in-Wasser (O/W)-Emulsionen. Die Methode von Griffin wurde in J. Soc. Cosmet. Chem. 1, 1949, 311-326 veröffentlicht.

Die Ethercarbonsäuresalze (IIIi) und nichtionischen Tenside (IIIii) können als solche oder in Kombination mit weiteren Emulgatoren (Coemulgatoren) (VI) eingesetzt werden. So werden sie in einer bevorzugten Ausführungsform in Kombination mit anionischen, kationischen und/oder zwitterionischen Coemulgatoren (VI) eingesetzt.

Anionische Coemulgatoren enthalten einen lipophilen Rest und eine polare Kopfgruppe, die eine anionische Gruppe wie beispielsweise eine Carboxylat-, Sulfonat- oder Phenolatgruppe trägt. Typische anionische Coemulgatoren umfassen beispielsweise Fettsäuresalze von Fettsäuren mit einem bevorzugt linearen, gesättigten oder ungesättigten Kohlenwasserstoffrest mit 8 bis 24 C-Atomen. Bevorzugte Salze sind die Alkali-, Erdalkali- und Ammoniumsalze wie beispielsweise Natriumpalmitat, Kaliumoleat, Ammoniumstearat, Diethanolammoniumtalloat und Triethanolammoniumcocoat. Weitere geeignete anionische Coemulgatoren sind polymere anionische Tenside zum Beispiel auf Basis neutralisierter Copolymere aus Alkyl(meth)acrylaten und (Meth)acrylsäure sowie neutralisierter Partialester von Stryrol-Maleinsäure-Copolymeren. Auch Alkyl-, Aryl- und Alkylarylsulfonate, Sulfate alkoxilierter Fettalkohole und Alkylphenole sowie Sulfosuccinate und insbesondere deren Alkali-, Erdalkali- und Ammoniumsalze sind als Coemulgatoren (VI) geeignet.

In einer bevorzugten Ausführungsform werden als anionische Coemulgatoren Alkanolammoniumsalze polyzyklischer Carbonsäuren eingesetzt. Besonders bevorzugt sind dabei solche Verbindungen, die durch Neutralisation mindestens einer polyzyklischen Carbonsäure mit mindestens einem Alkanolamin herstellbar sind. Bevorzugte Alkanolamine sind die auch zur Herstellung von Ethercarbonsäure-Ammoniumsalzen (IIIi) genannten Alkanolamine der Forme! (9). Bevorzugte polyzyklische Carbonsäuren leiten sich von polyzyklischen Kohlenwasserstoffen ab, die mindestens zwei fünf- und/oder sechsgliedrige Ringe enthalten, die über zwei bevorzugt vizinale Kohlenstoffatome miteinander verbunden sind. Beispiele für bevorzugte polyzyklische Carbonsäuren sind auf Naturharzen basierende Säuren wie beispielsweise Abietinsäure, Dihydroabietinsäure, Tetrahydroabietinsäure, Dehydroabietinsäure, Neoabietinsäure, Pimarsäure, Levopimarsäure und Palustrinsäure sowie deren Derivate und Mischungen. Auch aus Mineralölen extrahierte Gemische aus anellierten und alkylierten Cyclopentan- und Cyclohexancarbonsäuren (Naphthensäuren) sind als polyzyklische Carbonsäuren geeignet.

Kationische Coemulgatoren enthalten einen lipophilen Rest und eine polare Kopfgruppe, die eine kationische Gruppe trägt. Typische kationische Coemulgatoren sind Salze langkettiger primärer, sekundärer oder tertiärer Amine natürlichen oder synthetischen Ursprungs. Auch quartäre Ammoniumsalze wie beispielsweise von Talgfett abgeleitete Tetraalkylammoniumsalze und Imidazoliniumsalze sind als kationische Coemulgatoren geeignet.

Unter zwitterionischen Coemulgatoren werden Amphiphile verstanden, deren polare Kopfgruppe sowohl ein anionisches wie auch ein kationisches Zentrum trägt, die über kovalente Bindungen miteinander verknüpft sind. Typische zwitterionische Coemulgatoren umfassen beispielsweise N-Alkyl-N-oxide, N-Alkylbetaine und N-Alkylsulfobetaine.

Das Ethercarbonsäuresalz (IIIi), nichtionisches Tensid (IIIii) und gegebenenfalls weitere Coemulgatoren (VI) enthaltende Dispergiermittel (III) wird den erfindungsgemäßen Dispersionen in einer Menge von insgesamt 0,5 bis 12 Gew.-%, besonders bevorzugt 1 bis 8 Gew.-% und speziell 2 bis 5 Gew.-% wie beispielsweise 0,5 bis 8 Gew.-%, 0,5 bis 5 Gew.-%, 1 bis 10 Gew.-%, 1 bis 5 Gew.-%, 2 bis 10 Gew.-% oder 2 bis 8 Gew.-% zugesetzt, jeweils bezogen auf die Gesamtmenge der Dispersion.

Das Dispergiermittel (III) enthält 5 bis 95 Gew.-%, bevorzugt 20 bis 80 Gew.-% und speziell 30 bis 70 Gew.-% wie beispielsweise 5 bis 80 Gew.-%, 5 bis 70 Gew.-%, 20 bis 95 Gew.-%, 20 bis 70 Gew.-%, 30 bis 95 Gew.-% oder 30 bis 80 Gew.-% Ethercarbonsäuresalz (IIIi). Weiterhin enthält es 95 bis 5 Gew.-%, bevorzugt 80 bis 20 Gew.-% und speziell 70 bis 30 Gew.-% wie beispielsweise 95 bis 20 Gew.-%, 95 bis 30 Gew.-%, 80 bis 5 Gew.-%, 80 bis 30 Gew.-%, 70 bis 5 Gew.-% oder 20 bis 80 Gew.-% nichtionisches Tensid (IIIii). Bevorzugt liegt das Gewichtsverhältnis zwischen Ethercarbonsäuresalz (IIIi) und nichtionischem Tensid (IIIii) zwischen 1:10 und 10:1 und speziell zwischen 1:8 und 8:1 wie beispielsweise zwischen 1:10 und 8:1, zwischen 8:1 und 1:10 oder zwischen 8:1 und 1:10.

Die Coemulgatoren (VI) werden, sofern anwesend, bevorzugt im Gewichtsverhältnis von 1:20 bis 2:1 und insbesondere 1 : 10 bis 1 : 1 wie beispielsweise 1 : 5 bis 1 : 2 bezogen auf die Masse von Ethercarbonsäuresalz (IIIi) und nichtionischem Tensid (IIIii) zugesetzt. In einer bevorzugten Ausführungsform addieren sich die Mengen von Ethercarbonsäuresalz (IIIi), nichtionischem Tensid (IIIii) und Coemulgator (VI) zu 100 % des Dispergiermittels (III), In einer speziellen Ausführungsform addieren sich die Mengen von Ethercarbonsäuresalz (IIIi) und nichtionischem Tensid (IIIii) zu 100 % des Dispergiermittels (III).

Als wassermischbare Lösemittel (V) eignen sich bevorzugt solche Lösemittel, die eine hohe Polarität besitzen und insbesondere solche, die eine bei Raumtemperatur und 2450 MHz gemessene Dielektrizitätskonstante (relative Permittivität ε') von mindestens 3 und insbesondere von mindestens 10 aufweisen. Üblicherweise enthalten derartige Lösemittel 10 bis 80 Gew.-% an Heteroatomen wie Sauerstoff und/oder Stickstoff. Besonders bevorzugt sind sauerstoffhaltige Lösemittel. Die relative Permittivität ε' des Lösemittels beschreibt dabei das Verhältnis seiner Permittivität ε zur Permittivität ε₀ des Vakuums (ε' = ε / ε₀). Die Dielektrizitätskonstanten vieler Lösemittel sind beispielsweise in Brittany L. Hayes, Microwave Synthesis, CEM Publishing 2002, Seite 35 und in Arthur von Hippel (Hrsg.): Dielectric Materials and Applications. Technology Press, Boston MA u. a. 1954 (2nd edition. Artech House, Boston MA 1995), Seiten 362-367 tabelliert.

In den wassermischbaren Lösemitteln (V) und ihren Mischungen mit Wasser sind die erfindungsgemäß einsetzbaren Kaltfließverbesserer (I) zumindest bei Raumtemperatur und oftmals auch bei Temperaturen bis zu 40 °C und teilweise von bis zu 50 °C im Wesentlichen unlöslich, das heißt diese Lösemittel lösen die Polymere (I) bei Raumtemperatur bevorzugt zu weniger als 5 Gew.-%, insbesondere zu weniger als 2 Gew.-% wie beispielsweise zu weniger als 1 Gew.-%.

Bevorzugte mit Wasser mischbare organische Lösemittel (V) sind Alkohole mit 2 bis 14 C-Atomen, Glykole mit 2 bis 10 C-Atomen und Poly(glykole) mit 2 bis 50 Monomereinheiten. Die Glykole und Polyglykole können auch endständig mit niederen Alkoholen verethert bzw. mit niederen Fettsäuren verestert sein. Dabei ist jedoch bevorzugt, dass nur eine Seite des Glykols verschlossen ist. Beispiele für geeignete wassermischbare organische Lösemittel sind Ethylenglykol, Diethylenglykol, Triethylenglykol, Polyethylenglykole, Propylenglykol, Dipropylenglykol, Polypropylenglykole, 1,2-Butylenglykol, 1,3-Butylenglykol, 1,4-Butylenglykol, Glycerin sowie die Monomethylether, Monopropylether, Monobutylether und Monohexylether dieser Glykole. Beispiele für weitere geeignete Lösemittel sind Alkohole (z. B. Methanol, Ethanol, Propanol, Isopropanol, Butanol, 1-Pentanol Hexanol, 2-Ethylhexanol, Diacetonalkohol, 2,6-Dimethyl-4-heptanol), Acetate (z. B. Ethylacetat, 2-Ethoxyethylacetat), Ketone (z.B. Aceton, Butanon, Pentanon, Hexanon) und Lactone (z. B. Butyrolacton). Besonders bevorzugte mit Wasser mischbare organische Lösemittel (V) sind Polyole wie Ethylenglykol, Diethylenglykol und Glycerin.

Der Anteil der aus Wasser (IV) und dem organischen, mit Wasser mischbaren Lösemittel (V) gebildeten kontinuierlichen Phase der erfindungsgemäßen Dispersionen liegt bevorzugt zwischen 20 und 80 Gew.-%, insbesondere zwischen 30 und 75 Gew.-% und speziell zwischen 40 und 70 Gew.-% wie beispielsweise zwischen 20 und 75 Gew.-%, zwischen 20 und 70 Gew.-%, zwischen 30 und 80 Gew.-%, zwischen 30 und 70 Gew.-%, zwischen 40 und 80 Gew.-% oder zwischen 40 und 75 Gew.-%.

Der Anteil des organischen, mit Wasser mischbaren Lösemittels (V) an der von Wasser (IV) und dem organischen, mit Wasser mischbaren Lösemittel (V) gebildeten kontinuierlichen Phase liegt bevorzugt zwischen 10 und 90 Gew.-%, insbesondere zwischen 30 und 85 Gew.-% und speziell zwischen 50 und 75 Gew.-% wie beispielsweise zwischen 10 und 85 Gew.-%, zwischen 10 und 75 Gew.-%, zwischen 30 und 90 Gew.-%, zwischen 30 und 75 Gew.-%, zwischen 50 und 90 Gew.-% oder zwischen 50 und 85 Gew.-%. Der Anteil von Wasser (IV) an der von Wasser (IV) und dem organischen, mit Wasser mischbaren Lösemittel (V) gebildeten kontinuierlichen Phase liegt bevorzugt zwischen 10 und 90 Gew.-%, insbesondere zwischen 15 und 70 Gew.-% und speziell zwischen 25 und 50 Gew.-% wie beispielsweise zwischen 10 und 70 Gew.-%, zwischen 10 und 50 Gew.-%, zwischen 15 und 90 Gew.-%, zwischen 15 und 50 Gew.-%, zwischen 25 und 90 Gew.-% oder zwischen 25 und 70 Gew.-%. Besonders bevorzugt liegt das Mengenverhältnis zwischen Wasser und dem mit Wasser mischbaren Lösemittel zwischen 1:8 und 8:1, bevorzugt zwischen 1:5 und 5:1 und speziell zwischen 1:3 und 3:1 wie beispielsweise zwischen 1:8 und 5:1, zwischen 1:8 und 3:1, zwischen 1:5 und 8:1, zwischen 1:5 und 3:1 oder zwischen 1:3 und 8:1 oder 1:3 bis 5:1.

Die erfindungsgemäßen Dispersionen enthalten bevorzugt

| | |
|---|---|
| 5 - 60 Gew.-% | mindestens eines als Kaltfließverbesserer für Mineralöle wirksamen öllöslichen Polymers (I) |
| 5 - 40 Gew.-% | mindestens eines organischen, mit Wasser nicht mischbaren Lösemittels (II) |
| 0,5 - 12 Gew.-% | eines Dispergiermittels enthaltend, bezogen auf die Gesamtmenge an Dispergiermittel |
| | i) 10 - 90 Gew.-% mindestens eines Salzes einer Ethercarbonsäure, und |
| | ii) 90 - 10 Gew.-% mindestens eines nichtionischen Tensids |
| 20 - 80 Gew.-% | einer kontinuierlichen Phase aus 10 bis 90 Gew.-% Wasser (IV) und 90 bis 10 Gew.-% mindestens eines organischen, mit Wasser mischbaren Lösemittels (V). |

Besonders bevorzugt enthalten die erfindungsgemäßen Dispersionen 10 bis 50 Gew.-% und insbesondere 25 bis 45 Gew.-% wie beispielsweise 10 bis 45 Gew.-% oder 25 bis 50 Gew.-% eines als Kaltfließverbesserer für Mineralöle wirksamen öllöslichen Polymers (I). Der Anteil des organischen, mit Wasser nicht mischbaren Lösemittels (II) liegt bevorzugt zwischen 3 und 30 Gew.-%, insbesondere zwischen 5 und 25 Gew.-% und speziell zwischen 7 und 20 Gew.-% wie beispielsweise zwischen 3 und 25 Gew.-%, zwischen 3 und 20 Gew.-%, zwischen 5 und 30 Gew.-%, zwischen 5 und 20 Gew.-%, zwischen 7 und 30 Gew.-% oder zwischen 8 und 25 Gew.-% bezogen auf die Gesamtmasse der Dispersion. Der Wassergehalt der erfindungsgemäßen Dispersionen liegt insbesondere zwischen 10 und 60 Gew.-% und speziell zwischen 15 und 50 Gew.-% wie beispielsweise zwischen 10 und 50 Gew.-% oder zwischen 15 und 60 Gew.-%. In einer bevorzugten Ausführungsform liegt der Anteil des organischen, mit Wasser mischbaren Lösemittels (V) zwischen 10 und 70 Gew.-% insbesondere zwischen 20 und 60 Gew.-% und speziell zwischen 25 und 50 Gew.-% wie beispielsweise zwischen 10 und 60 Gew.-%, zwischen 10 und 50 Gew.-%, zwischen 20 und 70 Gew.-%, zwischen 20 und 50 Gew.-%, zwischen 25 und 70 Gew.-% oder zwischen 25 und 60 Gew.-%, jeweils bezogen auf die Gesamtmasse der Dispersion.

Zur Herstellung der erfindungsgemäßen Dispersionen können die Bestandteile des erfindungsgemäßen Additivs, gegebenenfalls nach vorhergehendem Erwärmen, zusammengegeben und unter Erwärmen und Rühren dispergiert werden. Die Reihenfolge der Zugabe der Bestandteile ist dabei nicht entscheidend. Die nachfolgenden Beispiele stellen bevorzugte Ausführungsformen dar, ohne die Herstellung der Dispersionen auf die beschriebenen Verfahren einzuschränken.

In einer bevorzugten Ausführungsform wird der Kaltfließverbesserer (I) zuerst in dem mit Wasser nicht mischbaren Lösemittel (II), gegebenenfalls unter Erwärmen, gelöst. Bevorzugt wird dabei bei Temperaturen zwischen 20 und 80 °C und insbesondere bei Temperaturen zwischen dem Schmelzpunkt des Polymers bzw. dem Stockpunkt des Polymers im eingesetzten Lösemittel und dem Siedepunkt des Lösemittels gearbeitet. Die Menge an Lösungsmittel wird dabei bevorzugt so bemessen, dass die Lösungen mindestens 20 Gew.-%, vorzugsweise 25 bis 75 Gew.-% und speziell 35 bis 60 Gew.-% wie beispielsweise 20 bis 75 Gew.-%, 20 bis 60 Gew.-%, 25 bis 60 Gew.-% oder 35 bis 75 Gew.-% an Kaltfließverbesserer (I) gelöst enthalten.

Zu der viskosen Lösung des Kaltfließverbesserers (I) in dem mit Wasser nicht mischbaren Lösemittel (II) werden in einer bevorzugten Ausführungsform unter Rühren und gegebenenfalls bei erhöhter Temperatur von beispielsweise 70 bis 90 °C das Ethercarbonsäuresalz (IIIi), das nichtionische Tensid (IIIii) und gegebenenfalls der Coemulgator (VI) sowie Wasser und das mit Wasser mischbare Lösemittel (V) zugegeben. Bevorzugt wird die wässrige Phase vor der Zugabe auf eine Temperatur von 50 bis 90 °C und insbesondere auf eine Temperatur zwischen 60 und 80 °C erwärmt. Die wässrige Phase kann auch bei höheren Temperaturen wie beispielsweise Temperaturen bis zu 150 °C zugegeben werden, wobei dann aber ein Arbeiten im geschlossenen System unter Druck erforderlich ist. In einer weiteren bevorzugten Ausführungsform wird die viskose Lösung des Kaltfließverbesserers (I) in dem mit Wasser nicht mischbaren Lösemittel (II) unter Rühren und gegebenenfalls bei erhöhter Temperatur von beispielsweise 70 bis 90 °C in einer Lösung des Ethercarbonsäuresalzes (IIIi), des nichtionischen Tensids (IIIii) und gegebenenfalls des Coemulgators (VI) in Wasser und dem mit Wasser mischbaren Lösemittel (V) dispergiert.

In einer speziellen Ausführungsform werden Wasser und das mit Wasser mischbare Lösemittel (V) als Mischung eingesetzt. Bevorzugt wird diese Mischung vor ihrem Einsatz auf eine Temperatur zwischen 50 und 100 °C und insbesondere auf eine Temperatur zwischen 60 und 80 °C erwärmt.

In einer speziellen Ausführungsform wird das Ethercarbonsäuresalz in situ hergestellt, beispielsweise durch Umsetzung der Ethercarbonsäure mit einem Amin der Formel (9). Dies kann auch in der Polymerlösung aus (I) und (II), in Wasser, in dem mit Wasser mischbaren Lösemittel (V) oder in einer Mischung aus Wasser und (IV) erfolgen.

Der Dispersion können außerdem noch geringe Mengen weiterer Additive wie beispielsweise pH-Regulatoren, pH-Puffer, anorganische Salze, Antioxidantien, Konservierungsmittel, Korrosionsinhibitoren oder Metalldeaktivatoren zugesetzt werden. So hat sich beispielsweise die Zugabe von ca. 0,5 bis 1,5 Gew.-% - bezogen auf die Gesamtmasse der Dispersion - eines Entschäumers wie beispielsweise einer wässrigen Polysiloxanemulsion bewährt.

In der Praxis hat es sich oftmals bewährt, die erfindungsgemäßen Dispersionen zum weiteren Verhindern sowohl des Aufrahmens als auch des Absetzens von dispergierten Teilchen durch Zusatz Rheologie modifizierender Substanzen so einzustellen, dass die kontinuierliche Phase eine geringe Fließgrenze aufweist. Diese Fließgrenze liegt bevorzugt in der Größenordnung von 0,001 bis 3 Pa, insbesondere zwischen 0,05 und 1 Pa. Im idealen Fall wird die plastische Viskosität dabei nur wenig bis gar nicht beeinflusst.

Als Rheologie modifizierende Substanzen werden bevorzugt wasserlösliche Polymere eingesetzt. Neben blockartig polymerisierten ABA-Poly(alkylenglykolen) und Poly(alkylenglykol)diestern langkettiger Fettsäuren sind insbesondere natürliche, modifizierte und synthetische wasserlösliche Polymere geeignet. Bevorzugte ABA-block-Poly(alkylenglykole) enthalten bevorzugt A-Blöcke aus Poly(propylenglykol) mit mittleren Molekulargewichten von 100 bis 10.000 D, insbesondere von 150 bis 1.500 D und B-Blöcke aus Poly(ethylenglykol) mit mittleren Molekulargewichten von 200 bis 20.000 D, insbesondere von 300 bis 3000 D. Bevorzugte Polyalkylenglykoldiester bestehen bevorzugt aus Poly(ethylenglykol)-Einheiten mit einem mittleren Molekulargewicht von 100 bis 10.000 D, insbesondere von 200 bis 750 D. Die langkettigen Fettsäuren des Esters tragen bevorzugt Alkylreste mit 14 bis 30 C-Atomen, insbesondere mit 17 bis 22 C-Atomen.

Als Rheologie modifizierende Substanzen bevorzugte natürliche oder modifizierte natürliche Polymere sind zum Beispiel Guar, Johannisbrotkernmehl und deren modifizierte Derivate, Stärke, modifizierte Stärke wie beispielsweise Dextran, Xanthan und Xeroglucan, Zelluloseether wie beispielsweise Methylzellulose, Carboxymethylzellulose, Hydroxyethylzellulose und Carboxymethyl-HydroxyethylZellulose sowie hydrophob modifizierte, assoziativ verdickende Zellulosederivate und deren Kombinationen.

Als Rheologie modifizierende Substanzen besonders bevorzugte synthetische wasserlösliche Polymere sind insbesondere vernetzte und unvernetzte Homo- und Copolymere der (Meth)acrylsäure und deren Salze, Acrylamidopropansulfonsäure und deren Salze, Acrylamid, N-Vinylamide wie beispielsweise N-Vinyl-Formamid, N-Vinyl-Pyrrolidon oder N-Vinyl-Caprolactam. Insbesondere sind auch deren vernetzte und unvernetzte hydrophob modifizierte Polymere als Rheologiemodifizierer von Interesse für erfindungsgemäße Formulierungen.

Auch viskoelastische Tensidkombinationen aus nichtionischen, kationischen und zwitterionischen Tensiden sind als Rheologie modifizierende Zusätze geeignet.

Bevorzugt werden die Rheologie modifizierenden Substanzen gemeinsam mit dem Wasser zugesetzt. Sie können jedoch auch der Dispersion, bevorzugt vor der Scherung, zugesetzt werden. Bevorzugt enthalten die erfindungsgemäßen Dispersionen bezogen auf die Menge an Wasser 0,01 bis 5 Gew.-% und insbesondere 0,05 bis 1 Gew.-% einer oder mehrerer Rheologie modifizierender Substanzen.

In vielen Fällen ist die Stabilität der erfindungsgemäßen Dispersionen auch ohne Zusatz einer die Rheologie modifizierende Substanz ausreichend. So wird den erfindungsgemäßen Dispersionen in einer besonders bevorzugten Ausführungsform keine die Rheologie modifizierende Substanz zugesetzt.

Bei den so hergestellten Dispersionen handelt es sich um hervorragend lagerstabile, fließ- und pumpfähige Formulierungen, deren Viskositätseigenschaften eine Handhabung bei Temperaturen von unter -25 °C, oftmals bei Temperaturen unterhalb -30 °C und in vielen Fällen auch unterhalb -50 °C gestattet.

Zur Verbesserung der Langzeitstabilität der Dispersion hat es sich bewährt, die Teilchengröße der Dispersionen durch starke Scherung zu verkleinern. Dazu wird die gegebenenfalls erwärmte Dispersion hohen Scherraten von mindestens 10³ s⁻¹ und bevorzugt von mindestens 10⁵s⁻¹ wie beispielsweise von mindestens 10⁶ s⁻¹ ausgesetzt, wie sie beispielsweise mittels Zahnkranz-Dispergatoren (z. B. Ultra-Turrax®), oder Hochdruckhomogenisatoren mit klassischer oder bevorzugt verwinkelter Kanalarchitektur (Microfluidizer®) erzeugt werden können. Auch durch Cavitron oder Ultraschall sind geeignete Scherraten erzielbar.

Die mittels dynamischer Lichtstreuung bestimmte durchschnittliche Teilchengröße der Dispersionen liegt unterhalb 50 µm, bevorzugt zwischen 0,005 und 20 µm, insbesondere zwischen 0,01 und 10 µm und speziell zwischen 0,02 und 2 µm wie beispielsweise zwischen 0,005 und 50 µm, zwischen 0,005 und 10 µm, zwischen 0,005 und 2 µm, zwischen 0,01 und 50 µm, zwischen 0,01 und 20 µm, zwischen 0,01 und 2 µm, zwischen 0,02 und 50 µm, zwischen 0,02 und 20 µm oder zwischen 0,02 und 10 µm.

Die erfindungsgemäßen, Ethercarbonsäuresalz (IIIi) und nichtionisches Tensid (IIIii) als Dispergiermittel enthaltenden Dispersionen sind trotz eines hohen Wirkstoffgehalts von bis zu 60 Gew.-% niedrig viskose Flüssigkeiten. Ihre Viskositäten bei -10 °C liegen üblicherweise unterhalb 2.000 mPa·s, vielfach unterhalb 1.000 mPa·s und oftmals unterhalb 750 mPa·s wie beispielsweise unterhalb 500 mPas. Ihr Eigenstockpunkt liegt üblicherweise unterhalb -10 °C und in speziellen Fällen unterhalb -25 °C und oftmals unterhalb -30 °C wie beispielsweise unterhalb -45 °C. Sie lassen sich somit auch unter extremen klimatischen Bedingungen wie beispielsweise in arktischen Gebieten wie auch bei off-shore-Anwendungen ohne weitere Vorkehrungen gegen das Stocken der Additive einsetzen. Die erfindungsgemäßen Dispersionen lassen sich auf Grund ihrer geringen Viskosität auch bei niedrigen Temperaturen mit nur geringem Energieaufwand pumpen. Die Wiederaufnahme einer unterbrochenen Förderung ist auf Grund einer auch bei niedrigen Temperaturen sehr niedrigen Fließgrenze der erfindungsgemäßen Dispersionen problemlos möglich.

Auch eine Applikation down-the-hole ist ohne vorheriges Verdünnen der Dispersionen und ohne Beheizen der Förderleitungen möglich. Darüber hinaus zeigen sie auch bei erhöhten Temperaturen von über 30 °C wie beispielsweise über 45 °C, das heißt auch oberhalb der Schmelztemperatur des dispergierten Polymers eine hervorragende Langzeitstabilität. Auch nach mehrwöchiger und teilweise mehrmonatiger Lagerung zeigen die erfindungsgemäßen Dispersionen keine oder nur vernachlässigbare Mengen an Koagulat bzw. abgesetztem Lösemittel. Üblicherweise liegt der Anteil an Koagulat bzw. abgesetztem Lösemittel nach zweimonatiger Lagerung bei weniger als 10 Vol.-%, speziell bei weniger als 5 Vol.-% und insbesondere bei weniger als 2 Vol.-% bezogen auf das Gesamtvolumen der erfindungsgemäßen Dispersionen. Eventuell auftretende Inhomogenitäten können zudem durch einfaches Aufrühren wieder homogenisiert werden.

Die erfindungsgemäßen Dispersionen sind insbesondere zur Verbesserung der Kälteeigenschaften von Rohölen und daraus hergestellten Produkten wie beispielsweise Heizölen, Bunkerölen, Rückstandsölen sowie Rückstandsöle enthaltenden Mineralölen geeignet. Üblicherweise enthalten die additivierten Rohöle sowie die daraus abgeleiteten, paraffinhaltigen Produkte etwa 10 bis 10.000 ppm und bevorzugt 20 bis 5.000 ppm wie beispielsweise 50 bis 2.000 ppm der erfindungsgemäßen Dispersionen. Mit den erfindungsgemäßen Dispersion, zugesetzt in Mengen von 10 bis 10.000 ppm - bezogen auf Mineralöl - erreicht man Stockpunktserniedrigungen von häufig mehr als 10 °C, oftmals mehr als 25 °C und teilweise bis zu 40 °C, und zwar sowohl bei Rohölen als auch bei raffinierten Ölen, wie Schmieröl oder schwerem Heizöl. Obwohl sie den öllöslichen, polymeren Wirkstoff in einem Medium zur Verfügung stellen, das im Wesentlichen ein Nichtlösemittel für diesen Wirkstoff ist, zeigen die erfindungsgemäßen Dispersionen eine den eingesetzten Lösungen der Pour Point Depressanten in organischen Lösemitteln überlegene Wirksamkeit.

### Beispiele

### Herstellung der Dispersionen, Variante A

Die in Tabelle 2 angegebenen Mengen an Kaltfließverbesserer und Ethercarbonsäure wurden bei 80 - 85 °C im organischen, mit Wasser nicht mischbaren Lösemittel (Xylol, Solvent Naphtha) gelöst bzw. homogenisiert. Nach Zugabe einer zur Ethercarbonsäure equimolaren Menge der Base (als 10 %ige wässrige Lösung) wurde weitere 30 Minuten bei 80 - 85 °C gerührt, wobei sich eine inverse Emulsion (W/O) bildete. Anschließend wurde eine Mischung aus der verbleibenden Menge Wasser, dem organischen, mit Wasser mischbaren Lösemittel und dem nichtionischen Tensid zugegeben, wobei sich eine weiße, niedrig viskose Dispersion (O/W) bildete. Sofern der pH-Wert dieser Dispersion (als 1 %ige Verdünnung in Wasser) kleiner als 6 war, wurde mit weiterer Base auf einen pH-Wert >6 eingestellt. In Tabelle 2 sind die den Dispersionen insgesamt zugesetzten Mengen an Base und der damit eingestellte pH-Wert der Dispersion wiedergegeben. Nach Abkühlen auf 50 °C wurde die Dispersion 2 Minuten mit einem Ultra-Turrax® T45 mit Werkzeug G45M bei 21.500 U/min geschert.

### Herstellung von Dispersionen, Variante B

Die in Tabelle 2 angegebenen Mengen der Ausgangsmaterialien wurden in ein Becherglas dosiert und auf 80 - 85 °C erwärmt. Sofern der pH-Wert dieser Dispersion (als 1 %ige Verdünnung in Wasser) kleiner als 6 war, wurde mit weiterer Base auf einen pH-Wert >6 eingestellt (Tabelle 2 gibt wie für Variante A die den Dispersionen insgesamt zugesetzten Mengen an Base und die damit eingestellten pH-Werte der Dispersionen wieder). Anschließend wurde 1 Stunde mittels Magnetrührer bei dieser Temperatur gerührt. Nach Abkühlen auf 50 °C wurde die Dispersion 2 Minuten mit einem Ultra-Turrax® T45 mit Werkzeug G45M bei 21.500 U/min geschert.

**Tabelle 1: Eingesetzte Ausgangsmaterialien:**

| | | | | | |
|---|---|---|---|---|---|
| Kaltfließverbesserer | PPD 1 | Poly(stearylacrylat) mit K-Wert von 32 (gemessen nach Fikentscher in 5 %iger toluolischer Lösung) | | | |
| | PPD 2 | Mit Behenylacrylat im Gewichtsverhältnis 4:1 gepfropftes Ethylen-Vinylacetat-Copolymer mit einem Vinylacetatgehalt von 28 Gew.-% und einem MFI₁₉₀ von 7 g/10 Minuten. | | | |
| | PPD 3 | Mit Stearylacrylat im Gewichtsverhältnis 3:1 gepfropftes Ethylen-Vinylacetat-Copolymer mit einem Vinylacetatgehalt von 28 Gew.-% und einem MFI₁₉₀ von 7 g/10 Minuten. | | | |
| | PPD 4 | Mit Behenylalkohol verestertes Copolymer aus Maleinsäureanhydrid und C₂₀₋₂₄-α-Olefin, Säurezahl 38 mg KOH/g und gewichtsmittlerem Molekulargewicht Mw von 10.000 g/mol | | | |
| | PPD 5 | Mit Behenylalkohol verestertes Copolymer aus Maleinsäureanhydrid und C₂₀₋₂₄-α-Olefin, Säurezahl 9 mg KOH/g und gewichtsmittlerem Molekulargewicht Mw von 11.500 g/mol | | | |
| | PPD 6 | Ethylen-Vinylacetat-Copolymer mit einem Vinylacetatgehalt von 25 Gew.-% und einem gewichtsmittleren Molekulargewicht Mw von 100.000 g/mol (gemessen mittels GPC in THF gegen Poly(styrol)-Standards) | | | |
| | PPD 7 | C_{20/24}-Alkylphenol-Formaldehydharz mit einem gewichtsmittleren Molekulargewicht Mw von 5.400 g/mol (gemessen mittels GPC in THF gegen Poly(styrol)-Standards) | | | |
| Ethercarbonsäuren | ECS 1 | Iso-tridecanol + 7 EO-ethercarbonsäure | | | |
| | ECS 2 | Laurylalkohol +5 EO-ethercarbonsäure | | | |
| | ECS 3 | Oleylalkohol + 8 EO-ethercarbonsäure | | | |
| | ECS 4 | Oleylalkohol + 10 EO-ethercarbonsäure | | | |
| Basen | DEA | Diethanolamin | | | |
| | TEA | Triethanolamin | | | |
| | KOH | KOH | | | |
| | TEM | Triethylamin | | | |
| Nichtionische Tenside | NiS 1 | Isotridecanol ethoxyliert mit 15 mol Ethylenoxid HLB 15,4 | | | |
| | NiS 2 | Isotridecanol ethoxyliert mit 2,5 mol Ethylenoxid; HLB 8,2 | | | |
| | NiS 3 | Tri-sec.-Butylphenol ethoxyliert mit 30 mol Ethylenoxid; HLB 16 | | | |
| | NiS 4 | N-C_{12/24}-Acy)-N-methylglucamid; HLB 11,5 | | | |
| | NiS 5 (V) | Cocosfettalkohol alkoxiliert mit 4 mol Ethylenoxid und 4 mol Propylenoxid, HLB6,0 | | | |
| Mit Wasser misch bares org. Lösemittel | MEG | Monethylenglykol | Mit Wasser nicht mischbares org. Lösemittel | Xyl: | Xylol |
| | DEG | Diethylenglykol | | SN: | Solvent Naphtha (aromat. Lösem ittelgem isch mit Siedebereich 185-215 °C) |
| | EtOH | Ethanol | | | |
| | IPA | Isopropanol | | | |
| | GLY | Glycerin | | | |
| | W | Wasser | | | |
| | AS 1 (V) | Behensäure | | | |
| | AS 2 (V) | Mischung aus 1 Gew.-Teil polyzyklischer Carbonsäuren (Hauptbestandteile Abietinsäure, Neoabietinsäure, Dehydroabietinsäure, Palustrinsäure, Pimarsäure und Levopimarsäure) sowie 3 Gew.-Teilen Tallöfettsäure mit einem Fettsäuregehalt von 98 %. | | | |

Die Charakterisierung der Dispersionen erfolgte jeweils nach der Scherung. Viskosität und Fließgrenze wurden mit einem Platte-Kegel-Viskosimeter mit einem Durchmesser von 35 mm, einem Kegelwinkel von 4° und einer Scherrate von 100 s⁻¹ bestimmt. Die Bestimmung der Fließgrenze erfolgte gemäß DIN EN ISO 3219. Die Teilchengrößen und -verteilungen der Dispersionen wurden mittels dynamischer Lichtstreuung (mit Gerät vom Typ Mastersizer 2000; Malvern Instruments) bestimmt. Schmelzindices (MFI₁₉₀) der eingesetzten Polymere wurden gemäß DIN 53735 bei 190 °C und einer Auflagekraft von 2,16 kg bestimmt.

**Tabelle 2: Zusammensetzung der Dispersionen (Menge in g)**

| Beispiel | PPD | hyrophobes Lösemittel (II) | Ether-carbonsäure | Base | nichtionisches Tensid | Wasser | hydrophiles Lösemittel (V) | pH | Herstell-Variante |
|---|---|---|---|---|---|---|---|---|---|
| 1 | PPD 4 (20) | SN (10) | ECS 3 (1,8) | TEA (1,0) | NiS 2 (2,0) | (38) | MEG (28) | 7,91 | A |
| 2 | PPD 3 (30) | SN (20) | ECS 1 (1,8) | TEA (0,5) | NiS 1 (2,0) | (25) | MEG (21) | 7,37 | A |
| 3 | PPD 3 (25) | SN (17) | ECS 1 (2,7) | DEA (0,5) | NiS 1 (5,0) | (27) | DEG (23) | 6,86 | A |
| 4 | PPD 5 (20) | SN (20) | ECS 1 (1,8) | DEA (0,5) | NiS 1 (2,0) | (30) | MEG (30) | 7,99 | A |
| 5 | PPD 1 (24) | Xyl (16) | ECS 4 (1,8) | TEA (1,0) | NiS 1 (2,0) | (32) | MEG (23) | 7,90 | A |
| 6 | PPD 4 (20) | SN (10) | ECS 1 (2,7) | TEA (1,0) | NiS 1 (2,5) | (27) | MEG (37) | 6,95 | A |
| 7 | PPD 4 (20) | SN (10) | ECS 1 (2,7) | TEA (1,0) | NiS 1 (2,0) | (27) | MEG (37) | 6,34 | B |
| 8 | PPD 3 (25) | SN (17) | ECS 1 (1,8) | TEA (0,5) | NiS 2 (2,0) | (20) | MEG (34) | 7,52 | A |
| 9 | PPD 1 (20) | Xyl (20) | ECS 1 (1,8) | TEA (1.0) | NiS 1 (2,0) | (24) | MEG (31) | 8,01 | A |
| 10 | PPD 5 (20) | SN (20) | ECS 1 (1,8) | DEA (0,5) | NiS 1 (2,0) | (22) | MEG (34) | 8,89 | B |
| 11 | PPD 3 (25) | SN (17) | ECS 1 (1,8) | TEA (0,5) | NiS 2 (2,0) | (20) | MEG (34) | 7,38 | B |
| 12 | PPD 6 (20) | SN (30) | ECS 1 (3,9) | TEA (0,7) | NiS 1 (2,9) | (27) | MEG (15) | 7,31 | A |
| 13 | PPD 7 (15) | SN (20) | ECS 2 (4,0) | DEA (2,0) | NiS 4 (2,5) | (18) | DEG (40) | 7,26 | B |
| 14 | PPD 4 (17) PPD 3 (12) | SN (16) | ECS 1 (1,8) | TEA (1,0) | NiS 1 (2,0) | (28) | MEG (18) | 8,30 | A |
| 15 | PPD 4 (30) | SN (15) | ECS 2 (3,0) | TEA (1,0) | NiS 1 (2,0) | (28) | MEG (35) | 6,72 | A |
| 16 | PPD 6 (20) | SN (30) | ECS 4 (3,0) | KOH (0,4) | NiS 4 (1,8) | (30) | GLY (15) | 7,60 | B |
| 17 | PPD 2 (25) | SN (17) | ECS 4 (2,5) | TEM (0,8) | NiS 4 (1,5) | (25) | DEG (30) | 9,12 | A |
| 18 | PPD 2 (24) | SN (16) | ECS 1 (2,7) | TEA (1,0) | NiS 3 (5,0) | (30) | MEG (21) | 7,95 | A |
| 19 | PPD 2 (25) | SN (17) | ECS 3 (1,8) | TEA (0,5) | NiS 4 (3,0) | (30) | DEG (25) | 7,42 | A |
| 20 | PPD 4 (15) | SN (15) | ECS 4 (1,5) | TEA (1,0) | NiS 2 (2,5) | (37) | GLY (28) | 7,14 | B |
| 21 (V) | PPD 3 (25) | SN (17) | ECS 1 (1,8) | TEA (0,5) | NiS 5 (2,5) | (25) | MEG (25) | 8,02 | A |
| 22 (V) | PPD 6 (20) | SN (30) | AS 1 (2,5) | KOH (0,8) | NiS 1 (2,0) | (23) | MEG (23) | 7,45 | A |
| 23 (V) | PPD 4 (30) | SN (18) | AS 2 (2,5) | DEA (1,0) | NiS 1 (2,0) | (26) | MEG (25) | 7,31 | A |

**Tabelle 3: Eigenschaften der Dispersionen**

| Dispersion gemäß Beispiel | Stabilität | Pour Point | Viskosität @ -10 °C | Fließgrenze |
|---|---|---|---|---|
| 1 | > 7 Tage | -30 °C | 44 mPas | <10 mPa |
| 2 | > 7 Tage | -36 °C | 371 mPas | <10 mPa |
| 3 | > 7 Tage | -36 °C | 467 mPas | <10 mPa |
| 4 | > 7 Tage | -45 °C | 168 mPas | <10 mPa |
| 5 | > 7 Tage | -45 °C | 110 mPas | <10 mPa |
| 6 | > 7 Tage | < -50°C | 157 mPas | <10 mPa |
| 7 | > 7 Tage | < -50 °C | 127 mPas | <10 mPa |
| 8 | > 7 Tage | < -50 °C | 624 mPas | 42 mPa |
| 9 | > 7 Tage | < -50 °C | 145 mPas | <10 mPa |
| 10 | > 7 Tage | < -50 °C | 259 mPas | <10 mPa |
| 11 | > 7 Tage | -39 °C | 306 mPas | <10 mPa |
| 12 | > 7 Tage | -36 °C | 940 mPas | 62 mPa |
| 13 | > 7 Tage | -19 °C | 241 mPas | <10 mPa |
| 14 | > 7 Tage | -39 °C | 209 mPas | <10 mPa |
| 15 | > 7 Tage | -33 °C | 582 mPas | 35 mPa |
| 16 | > 7 Tage | -36 °C | 205 mPas | <10 mPa |
| 17 | > 7 Tage | < -50 °C | 614 mPas | 39 mPa |
| 18 | > 7 Tage | -33 °C | 745 mPas | 50 mPa |
| 19 | > 7 Tage | -36 °C | 102 mPas | <10 mPa |
| 20 | > 7 Tage | -36 °C | 116 mPas | <10 mPa |
| 21 (V) | inhomogen | n. a. | n. a. | n.a. |
| 22 (V) | > 7 Tage | -18 °C | 2017 mPas | 540 mPa |
| 23 (V) | > 7 Tage | -24 °C | 1760 mPas | 306 mPa |

### Wirksamkeit als Pour Point Depressant

Die Prüfung der Wirksamkeit der erfindungsgemäßen Dispersionen sowie der für ihre Herstellung eingesetzten Lösungen in aromatischen Lösemitteln wurde in verschiedenen Roh- und Rückstandsölen vorgenommen. Pour Points wurden gemäß DIN ISO 3016 bestimmt. Die Anteile der Rohöle an gesättigten Kohlenwasserstoffen (Aliphaten), aromatischen Kohlenwasserstoffen (Aromaten), Harzen und Asphaltenen wurden mittels einer Kombination aus Dünnschichtchromatographie und Flammenionisationsdetektion in Anlehnung an IP 469 (latroscan-Analyse) bestimmt.

**Tabelle 5: Charakterisierung der Rohöle**

| Rohöl | Pour Point | Aliphaten | Aromaten | Harze Asphaltene | |
|---|---|---|---|---|---|
| A | 21 °C | 57,0 % | 21,3 % | 18,0 % | 3,7 % |
| B | 24 °C | 67,0 % | 13,5 % | 16,6 % | 2,9 % |

**Tabelle 4: Wirksamkeit der Dispersionen in Rohöl A**

| Beispiel | Additiv | Dosierrate | Pour Point |
|---|---|---|---|
| 24 | Beispiel 2 | 300 ppm | -12 °C |
| 25 | Beispiel 5 | 300 ppm | -9 °C |
| 26 | Beispiel 17 | 300 ppm | -15 °C |
| 27 (V) | PPD 1, 24 %ig in Xylol | 300 ppm | -6 °C |
| 28 (V) | PPD 2, 25 %ig in Solvent Naphtha | 300 ppm | -15 °C |
| 29 (V) | PPD 3, 30 %ig in Solvent Naphtha | 300 ppm | -12 °C |

**Tabelle 5: Wirksamkeit der Dispersionen in Rohöl B**

| Beispiel | Additiv | Dosierrate | Pour Point |
|---|---|---|---|
| 30 | Beispiel 2 | 200 ppm | 9 °C |
| 31 | Beispiel 6 | 200 ppm | 6 °C |
| 32 | Beispiel 10 | 200 ppm | 6 °C |
| 33 (V) | Beispiel 23 (V) | 135 ppm | 12 °C |
| 34 (V) | PPD 3, 30 %ig in Solvent Naphtha | 200 ppm | 9 °C |
| 35 (V) | PPD 4, 20 %ig in Solvent Naphtha | 200 ppm | 12 °C |
| 36 (V) | PPD 5, 20 %ig in Solvent Naphtha | 200 ppm | 9 °C |

Die Versuche zeigen, dass die überlegene Stabilität und die verbesserten Kälteeigenschaften wie auch die Performance der erfindungsgemäßen Dispersionen maßgeblich durch die Anwesenheit von Ethercarbonsäuresalzen bedingt sind. Weiterhin zeigen sie, dass die Wirksamkeit der in Form der erfindungsgemäßen Dispersion formulierten Wirkstoffe den Lösungen der entsprechenden Wirkstoffe in organischen Lösemitteln zumindest ebenbürtig, verschiedentlich sogar überlegen ist.

## Patentansprüche

1. Dispersionen, enthaltend eine organische Phase dispergiert in einer wässrigen Phase, worin
a) die dispergierte organische Phase mindestens ein als Kaltfließverbesserer für Mineralöle wirksames öllösliches Polymer als Komponente I) und mindestens ein organisches, mit Wasser nicht mischbares Lösemittel als Komponente II) enthält,
b) die kontinuierliche wässrige Phase Wasser als Komponente IV) und mindestens ein organisches, mit Wasser mischbares Lösemittel als Komponente V) enthält,
**dadurch gekennzeichnet dass** die Dispersion
c) 0,5 bis 12 Gew.-% eines Dispergiermittels als Komponente III) enthält, welches, bezogen auf die Gesamtmenge an Dispergiermittel,
i) 5 - 95 Gew.-% eines Salzes einer Ethercarbonsäure und
ii) 95 - 5 Gew.-% eines nichtionischen Tensids mit einem nach Griffin gemessenen HLB-Wert von größer als 7
umfasst.

2. Dispersion nach Anspruch 1, worin der Kaltfließverbesserer I ausgewählt ist aus der Gruppe bestehend aus
i) Copolymeren aus Ethylen und ethylenisch ungesättigten Estern, Ethern und/oder Alkenen,
ii) Homo- oder Copolymeren von C₁₀-C₃₀-Alkylreste tragenden Estern, Amiden und/oder Imiden ethylenisch ungesättigter Carbonsäuren,
iii) mit ethylenisch ungesättigten Estern und/oder Ethern gepfropften EthylenCopolymere,
iv) Homo- und Copolymere höherer Olefine, sowie
v) Kondensationsprodukten aus mindestens einen Alkylrest tragenden Phenolen und Aldehyden und/oder Ketonen.

3. Dispersion nach Anspruch 1 oder 2, worin der Kaltfließverbesserer I) ein Copolymer aus Ethylen und Vinylester umfasst.

4. Dispersion nach Anspruch 1 oder 2, worin der Kaltfließverbesserer I) ein Homo- oder Copolymer eines Esters, Amids und/oder Imids mindestens einer ethylenisch ungesättigten Dicarbonsäure ist, welches mindestens einen C₁₀-C₃₀-Alkylrest enthält.

5. Dispersion nach Anspruch 1 oder 2, worin der Kaltfließverbesserer ein mit einem ethylenisch ungesättigten Ester und/oder Ether gepfropftes Ethylen-Copolymer ist, wobei das Ethylen-Copolymer ein Ethylen-Vinylester-Copolymer ist.

6. Dispersion nach Anspruch 5, wobei der ethylenisch ungesättigte Ester ein C₁₀-C₃₀-Alkylreste tragender Ester der Acrylsäure und/oder Methacrylsäure ist.

7. Dispersion nach Anspruch 1 oder 2, worin der Kaltfließverbesserer ein Homo- und Copolymer von α-Olefinen mit 3 bis 30 C-Atomen ist.

8. Dispersion nach Anspruch 1 oder 2, worin der Kaltfließverbesserer ein Kondensationsprodukt aus mindestens einem mindestens einen Alkylrest tragenden Phenol und mindestens einem Aldehyd oder Keton ist.

9. Dispersion nach Anspruch 8, worin das Kondensationsprodukt der Formel (6) entspricht 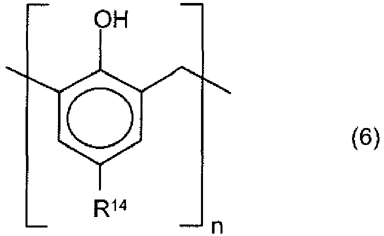 worin
R¹⁴ für C₁- bis C₁₀₀-Alkyl, C₂- bis -C₁₀₀-Alkenyl, O-C₁- bis O-C₁₀₀-Alkyl, O-C₂- bis O-C₁₀₀-Alkenyl, C(O)-O-C₁- bis C(O)-O-C₁₀₀-Alkyl, C(O)-O-C₂- bis C(O)-O-C₁₀₀-Alkenyl, O-C(O)-C₁- bis O-C(O)-C₁₀₀-Alkyl oder O-C(O)-C₂- bis O-C(O)-C₁₀₀-Alkenyl, und
n für eine Zahl von 2 bis 250 steht.

10. Dispersion nach einem oder mehreren der Ansprüche 1 bis 9, worin das Salz einer Ethercarbonsäure durch Neutralisation mindestens einer Ethercarbonsäure mit mindestens einer Base der Alkali- oder Erdalkalimetalle bzw. einem Amin hergestellt ist.

11. Dispersion nach einem oder mehreren der Ansprüche 1 bis 10, worin die Ethercarbonsäure der Formel (7) entspricht,
R¹⁵-(O-CₓH₂ₓ)_{y}-OCH₂COOH (7)
worin
R¹⁵ für eine lineare oder verzweigte Alkyl- oder Alkenylgruppe mit 4 bis 24 Kohlenstoffatomen, eine Alkylarylgruppe, deren Alkylrest 1 bis 24 C-Atome besitzt oder eine Arylgruppe,
x für die Zahl 2 und/oder 3 und
y für eine Zahl von 0 bis 20 steht.

12. Dispersion nach einem oder mehreren der Ansprüche 10 oder 11, worin das Amin ein Alkanolamin ist.

13. Dispersion nach Anspruch 12, worin das Alkanolamin ein primäres, sekundäres oder tertiäres Amin ist, das mindestens einen mit einer Hydroxylgruppe substituierten Alkylrest trägt.

14. Dispersion nach einem oder mehreren der Ansprüche 12 oder 13, worin das Alkanolamin der Formel (9) entspricht:
NR¹⁶R¹⁷R¹⁸ (9)
worin
R¹⁶ für einen mindestens eine Hydroxylgruppe tragenden Kohlenwasserstoffrest mit 1 bis 10 Kohlenstoffatomen und
R¹⁷, R¹⁸ unabhängig voneinander für Wasserstoff, einen gegebenenfalls substituierten Kohlenwasserstoffrest mit 1 bis 50 C-Atomen, insbesondere Ci- bis C₂₀-Alkyl, C₃- bis C₂₀-Alkenyl, C₆- bis C₂₀-Aryl oder für R¹⁶ stehen.

15. Dispersion nach Anspruch 10 oder 11, worin das Amin eine heterozyklische Verbindung ist, welche einen Cyclus mit 5 bis 7 Ringgliedern umfasst, der neben einem Stickstoffatom ein Sauerstoffatom umfasst, und der am Stickstoffatom einen Alkylrest mit 1 bis 4 C-Atomen oder eine Gruppe der Formel (10) trägt,
-(B-O)ₚ-R¹⁹ (10)
worin
B für einen Alkylenrest mit 2 oder 3 C-Atomen, und
p für 1 oder 2, und
R¹⁹ für Wasserstoff oder eine Gruppe der Formel -B-NH₂ steht.

16. Dispersion nach einem oder mehreren der Ansprüche 1 bis 15, worin das nichtionische Tensid ausgewählt ist aus der Gruppe bestehend aus
a) 1 bis 80-fach ethoxyliertem C₈- bis C₂₀-Alkanol, C₈- bis C₁₂-Alkylphenof, C₈- bis C₂₀-Fettsäure, C₈- bis C₂₀-Fettsäureamid,
b) Copolymeren aus Ethylenoxid und Propylenoxid, sowie
c) Partialestern von Polyolen mit Fettsäuren.

17. Dispersion nach einem oder mehreren der Ansprüche 1 bis 15, worin das nichtionische Tensid den Strukturformeln (11) bis (14) entspricht 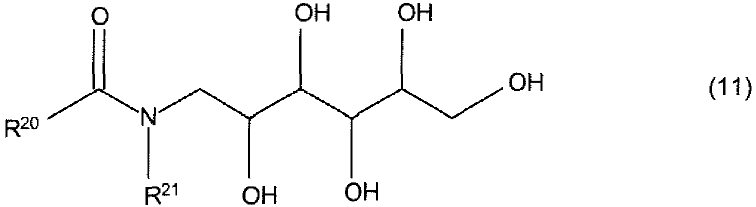 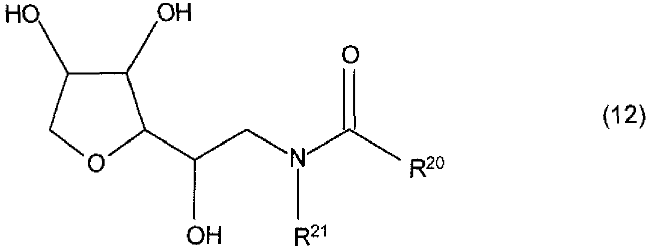 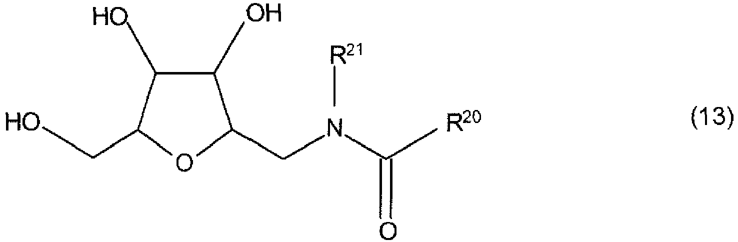 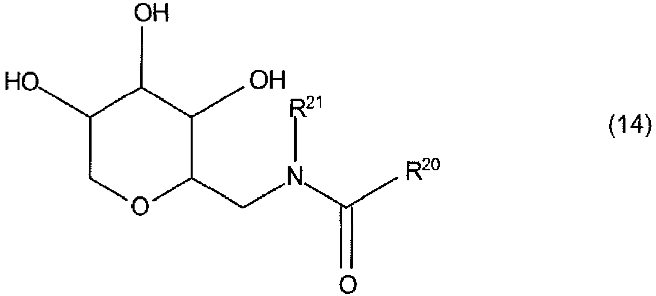 worin
R²⁰ für einen aliphatischen Kohlenwasserstoffrest mit 5 bis 29 C-Atomen und
R²¹ für einen aliphatischen Kohlenwasserstoffrest mit 1 bis 6 C-Atomen, vorzugsweise Methyl, stehen.

18. Dispersion nach einem oder mehreren der Ansprüche 1 bis 17, worin das Gewichtsverhältnis zwischen Ethercarbonsäuresalz und nichtionischem Tensid zwischen 1:10 und 10:1 beträgt.

19. Dispersion nach einem oder mehreren der Ansprüche 1 bis 18, worin das Dispergiermittel (III) weiterhin einen anionischen, kationischen und/oder zwitterionischen Coemulgator (VI) umfasst.

20. Dispersion nach einem oder mehreren der Ansprüche 1 bis 19, worin das mit Wasser mischbare Lösemittel (V) eine relative Permittivität εᵣ von mindestens 3 aufweist.

21. Dispersion nach einem oder mehreren der Ansprüche 1 bis 20, worin das organische mit Wasser mischbare Lösemittel (V) ausgewählt ist aus Alkoholen, Glykolen, Poly(glykolen), Acetaten, Ketonen und Lactonen.

22. Dispersion nach einem oder mehreren der Ansprüche 1 bis 21, enthaltend 5 - 60 Gew.-% eines als Kaltfließverbesserer für Mineralöle wirksamen öllöslichen Polymers (I).

23. Dispersion nach einem oder mehreren der Ansprüche 1 bis 22, enthaltend 5 - 40 Gew.-% mit Wasser nicht mischbares Lösemittel (II).

24. Dispersion nach einem oder mehreren der Ansprüche 1 bis 23, enthaltend 20 - 80 Gew.-% einer kontinuierlichen Phase aus Wasser (IV) und mindestens einem organischen, mit Wasser mischbaren Lösemittel (V).

25. Dispersion nach einem oder mehreren der Ansprüche 1 bis 24, worin die kontinuierliche Phase zwischen 10 und 90 Gew.-% Wasser (IV) und zwischen 90 und 10 Gew.-% des organischen, mit Wasser mischbaren Lösemittels (V) enthält, bezogen auf die Gesamtmenge der kontinuierlichen Phase.

26. Dispersion nach einem oder mehreren der Ansprüche 1 bis 25, worin der pH-Wert der Dispersion oberhalb 6,0 liegt, gemessen als 1 %ige Verdünnung in Wasser.

27. Dispersion nach einem oder mehreren der Ansprüche 1 bis 26, worin eine Fließgrenze erzeugende, die Rheologie modifizierende Substanz zugesetzt wird, bei der es sich um ein wasserlösliches Polymer handelt.

28. Verfahren zur Herstellung von Dispersionen nach einem oder mehreren der Ansprüche 1 bis 27, indem die Bestandteile I, II, III, IV und V unter Rühren bei Temperaturen oberhalb 50 °C durch Mischen in eine Dispersion überführt werden.

29. Verfahren zur Herstellung von Dispersion nach Anspruch 28, indem eine Lösung des als Kaltfließverbesserer für Mineralöle wirksamen öllöslichen Polymers (I) im organischen, mit Wasser nicht mischbaren Lösemittel (II) eingesetzt wird.

30. Verfahren zur Herstellung von Dispersion nach Anspruch 28, indem eine Mischung aus Wasser (IV), dem organischen, mit Wasser mischbaren Lösemittel (V) sowie dem Dispergiermittel (III) bei Temperaturen zwischen 30 °C und 100 °C mit einer Mischung der Bestandteile I und II versetzt wird, so dass sich eine Öl-in-Wasser-Dispersion bildet.

31. Verfahren zur Herstellung von Dispersionen nach Anspruch 28, indem die Bestandteile I), II) und III) homogenisiert und anschließend bei Temperaturen zwischen 30 °C und 100 °C mit einer Mischung der Bestandteile IV und V versetzt werden, so dass sich eine ÖI-in-Wasser-Dispersion bildet.

32. Verfahren zur Herstellung von Dispersion nach einem oder mehreren der Ansprüche 28 bis 31, indem die Mischung der Bestandteile geschert wird.

33. Verwendung von Dispersionen nach einem oder mehreren der Ansprüche 1 bis 27 zur Verbesserung der Kaltfließeigenschaften von Rohölen, Heizölen, Bunkerölen, Rückstandsölen sowie Rückstandsöle enthaltenden Mineralölen.

34. Verfahren zur Verbesserung der Kaltfließeigenschaften von Rohölen, Heizölen, Bunkerölen, Rückstandsölen sowie Rückstandsöle enthaltenden Mineralölen, indem paraffinhaltigen Mineralölen und daraus hergestellten Produkten Dispersionen nach einem oder mehreren der Ansprüche 1 bis 27 zugegeben werden.

## Claims

1. Dispersions comprising an organic phase dispersed in an aqueous phase, in which
a) the dispersed organic phase comprises at least one oil-soluble polymer effective as a cold flow improver for mineral oils as component I) and at least one organic, water-immiscible solvent as component II),
b) the continuous aqueous phase comprises water as component IV) and at least one organic, water-miscible solvent as component V),
**characterized in that** the dispersion contains
c) 0.5% to 12% by weight of a dispersant as component III), which, based on the total amount of dispersant, comprises
i) 5-95% by weight of a salt of an ethercarboxylic acid and
ii) 95-5% by weight of a nonionic surfactant having an HLB value measured according to Griffin of greater than 7.

2. Dispersion according to Claim 1, in which the cold flow improver I is selected from the group consisting of
i) copolymers of ethylene and ethylenically unsaturated esters, ethers and/or alkenes,
ii) homo- or copolymers of C₁₀-C₃₀-alkyl-bearing esters, amides and/or imides of ethylenically unsaturated carboxylic acids,
iii) ethylene copolymers grafted with ethylenically unsaturated esters and/or ethers,
iv) homo- and copolymers of higher olefins, and
v) condensation products of phenols bearing at least one alkyl radical and aldehydes and/or ketones.

3. Dispersion according to Claim 1 or 2, in which the cold flow improver I) comprises a copolymer of ethylene and vinyl ester.

4. Dispersion according to Claim 1 or 2, in which the cold flow improver I) is a homo- or copolymer of an ester, amide and/or imide of at least one ethylenically unsaturated dicarboxylic acid containing at least one C₁₀-C₃₀-alkyl radical.

5. Dispersion according to Claim 1 or 2, in which the cold flow improver is an ethylene copolymer grafted with an ethylenically unsaturated ester and/or ether, where the ethylene copolymer is an ethylene-vinyl ester copolymer.

6. Dispersion according to Claim 5, wherein the ethylenically unsaturated ester is a C₁₀-C₃₀-alkyl-bearing ester of acrylic acid and/or methacrylic acid.

7. Dispersion according to Claim 1 or 2, in which the cold flow improver is a homo- and copolymer of α-olefins having 3 to 30 carbon atoms.

8. Dispersion according to Claim 1 or 2, in which the cold flow improver is a condensation product of at least one phenol bearing at least one alkyl radical and at least one aldehyde or ketone.

9. Dispersion according to Claim 8, in which the condensation product conforms to the formula (6) 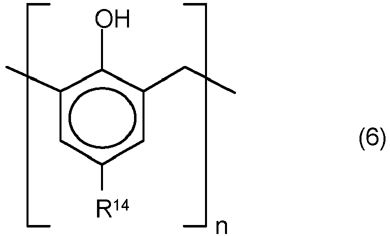 in which
R¹⁴ is C₁- to C₁₀₀-alkyl, C₂- to -C₁₀₀-alkenyl, O-C₁- to O-C₁₀₀-alkyl, O-C₂- to O-C₁₀₀-alkenyl, C(O)-O-C₁- to C(O)-O-C₁₀₀-alkyl, C(O)-O-C₂- to C(O)-O-C₁₀₀-alkenyl, O-C(O)-C₁- to O-C(O)-C₁₀₀-alkyl or O-C(O)-C₂- to O-C(O)-C₁₀₀-alkenyl, and
n is a number from 2 to 250.

10. Dispersion according to one or more of Claims 1 to 9, in which the salt of an ethercarboxylic acid has been prepared by neutralization of at least one ethercarboxylic acid with at least one base of the alkali metals or alkaline earth metals or an amine.

11. Dispersion according to one or more of Claims 1 to 10, in which the ethercarboxylic acid conforms to the formula (7)
R¹⁵-(O-CₓH₂ₓ)_{y}-OCH₂COOH (7)
in which
R¹⁵ is a linear or branched alkyl or alkenyl group having 4 to 24 carbon atoms, an alkylaryl group wherein the alkyl radical has 1 to 24 carbon atoms, or an aryl group,
x is the number 2 and/or 3 and
y is a number from 0 to 20.

12. Dispersion according to one or more of Claims 10 and 11, in which the amine is an alkanolamine.

13. Dispersion according to Claim 12, in which the alkanolamine is a primary, secondary or tertiary amine bearing at least one alkyl radical substituted by a hydroxyl group.

14. Dispersion according to one or more of Claims 12 and 13, in which the alkanolamine conforms to the formula (9):
NR¹⁶R¹⁷R¹⁸ (9)
in which
R¹⁶ is a hydrocarbyl radical which bears at least one hydroxyl group and has 1 to 10 carbon atoms and
R¹⁷, R¹⁸ are independently hydrogen, an optionally substituted hydrocarbyl radical having 1 to 50 carbon atoms, especially C₁- to C₂₀-alkyl, C₃- to C₂₀-alkenyl, C₆- to C₂₀-aryl or R¹⁶.

15. Dispersion according to Claim 10 or 11, in which the amine is a heterocyclic compound comprising a cycle which has 5 to 7 ring members and comprises not only a nitrogen atom but also an oxygen atom, and which bears, on the nitrogen atom, an alkyl radical having 1 to 4 carbon atoms or a group of the formula (10)
-(B-O)ₚ-R¹⁹ (10)
in which
B is an alkylene radical having 2 or 3 carbon atoms, and
p is 1 or 2, and
R¹⁹ is hydrogen or a group of the formula -B-NH₂.

16. Dispersion according to one or more of Claims 1 to 15, in which the nonionic surfactant is selected from the group consisting of
a) 1- to 80-tuply ethoxylated C₈- to C₂₀-alkanol, C₈- to C₁₂-alkylphenol, C₈ to C₂₀ fatty acid, C₈ to C₂₀ fatty acid amide,
b) copolymers of ethylene oxide and propylene oxide, and
c) partial esters of polyols with fatty acids.

17. Dispersion according to one or more of Claims 1 to 15, in which the nonionic surfactant conforms to the structural formulae (11) to (14) 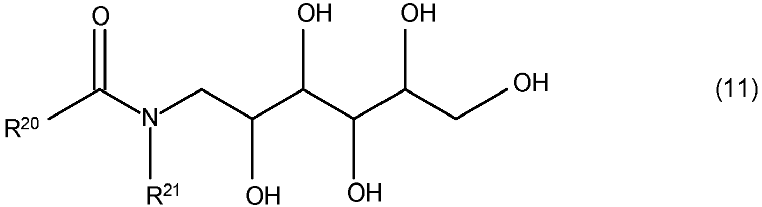 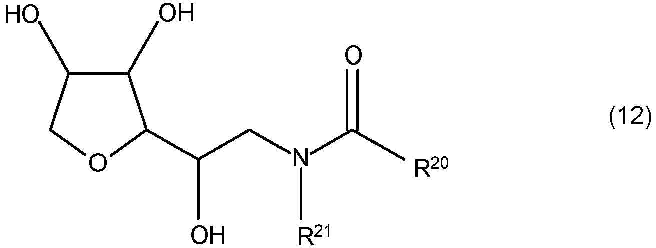 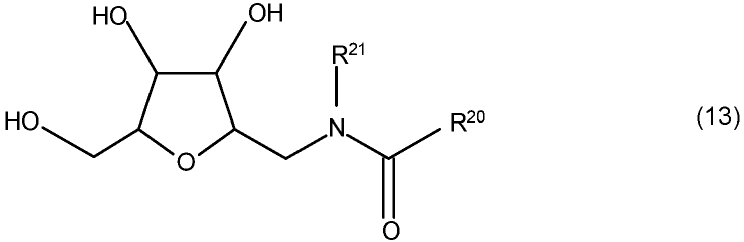 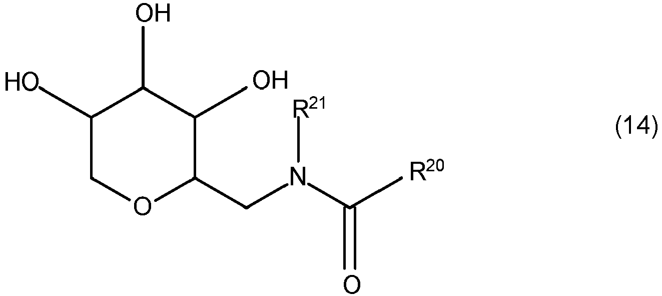 in which
R²⁰ is an aliphatic hydrocarbyl radical having 5 to 29 carbon atoms and
R²¹ is an aliphatic hydrocarbyl radical having 1 to 6 carbon atoms, preferably methyl.

18. Dispersion according to one or more of Claims 1 to 17, in which the weight ratio between ethercarboxylic salt and nonionic surfactant is between 1:10 and 10:1.

19. Dispersion according to one or more of Claims 1 to 18, in which the dispersant (III) further comprises an anionic, cationic and/or zwitterionic coemulsifier (VI).

20. Dispersion according to one or more of Claims 1 to 19, in which the water-miscible solvent (V) has a relative permittivity εᵣ of at least 3.

21. Dispersion according to one or more of Claims 1 to 20, in which the organic, water-miscible solvent (V) is selected from alcohols, glycols, poly(glycols), acetates, ketones and lactones.

22. Dispersion according to one or more of Claims 1 to 21, comprising 5-60% by weight of an oil-soluble polymer (I) effective as a cold flow improver for mineral oils.

23. Dispersion according to one or more of Claims 1 to 22, comprising 5-40% by weight of water-immiscible solvent (II).

24. Dispersion according to one or more of Claims 1 to 23, comprising 20-80% by weight of a continuous phase of water (IV) and at least one organic, water-miscible solvent (V).

25. Dispersion according to one or more of Claims 1 to 24, in which the continuous phase contains between 10% and 90% by weight of water (IV) and between 90% and 10% by weight of the organic, water-miscible solvent (V), based on the total amount of the continuous phase.

26. Dispersion according to one or more of Claims 1 to 25, in which the pH of the dispersion is above 6.0, measured as a 1% dilution in water.

27. Dispersion according to one or more of Claims 1 to 26, in which a rheology-modifying substance that generates a yield point is added, which is a water-soluble polymer.

28. Process for producing dispersions according to one or more of Claims 1 to 27, by converting constituents I, II, III, IV and V to a dispersion by mixing with stirring at temperatures above 50°C.

29. Process for producing dispersion according to Claim 28, by using a solution of the oil-soluble polymer (I) effective as a cold flow improver for mineral oils in the organic, water-immiscible solvent (II).

30. Process for producing dispersion according to Claim 28, by adding a mixture of constituents I and II to a mixture of water (IV), the organic, water-miscible solvent (V) and the dispersant (III) at temperatures between 30°C and 100°C, so as to form an oil-in-water dispersion.

31. Process for producing dispersions according to Claim 28, by homogenizing constituents I), II) and III) and then adding a mixture of constituents IV and V at temperatures between 30°C and 100°C, so as to form an oil-in-water dispersion.

32. Process for producing dispersion according to one or more of Claims 28 to 31, by subj ecting the mixture of the constituents to shear.

33. Use of dispersions according to one or more of Claims 1 to 27 for improving the cold flow properties of crude oils, heating oils, bunker oils, residue oils and mineral oils that contain residue oils.

34. Process for improving the cold flow properties of crude oils, heating oils, bunker oils, residue oils and mineral oils that contain residue oils, by adding dispersions according to one or more of Claims 1 to 27 to paraffinic mineral oils and products produced therefrom.

## Revendications

1. Dispersions, contenant une phase organique dispersée dans une phase aqueuse, dans laquelle
a) la phase organique dispersée contient en tant que composant I) au moins un polymère liposoluble actif pour huiles minérales en tant qu'agent améliorant l'écoulement à froid, et en tant que composant II) au moins un solvant organique non miscible à l'eau,
b) la phase aqueuse continue contient en tant que composant IV) de l'eau et en tant que composant V) au moins un solvant organique miscible à l'eau, **caractérisées en ce que** la dispersion contient
c) en tant que composant III) 0,5 à 12 % en poids d'un dispersant qui comprend, par rapport à la quantité totale de dispersant,
i) 5 - 95 % en poids d'un sel d'un acide éthercarboxylique et
ii) 95 - 5 % en poids d'un tensioactif non ionique ayant un rapport HLB mesuré selon Griffin de plus de 7.

2. Dispersion selon la revendication 1, dans laquelle l'agent améliorant l'écoulement à froid I est choisi dans le groupe constitué par
i) des copolymères d'éthylène et d'éthers, esters à insaturation éthylénique et/ou alcènes,
ii) des homo- ou copolymères d'esters portant des radicaux alkyle en C₁₀-C₃₀, d'amides et/ou d'imides d'acides carboxyliques à insaturation éthylénique,
iii) des copolymères d'éthylène greffés avec des éthers et/ou esters à insaturation éthylénique,
iv) des homo- ou copolymères d'oléfines supérieures, ainsi que
v) des produits de condensation de phénols portant au moins un radical alkyle et d'aldéhydes et/ou de cétones.

3. Dispersion selon la revendication 1 ou 2, dans laquelle l'agent améliorant l'écoulement à froid I) comprend un copolymère d'éthylène et d'ester vinylique.

4. Dispersion selon la revendication 1 ou 2, dans laquelle l'agent améliorant l'écoulement à froid I) contient un homo- ou copolymère d'un ester, amide et/ou imide d'au moins un acide dicarboxylique à insaturation éthylénique qui contient au moins un radical alkyle en C₁₀-C₃₀.

5. Dispersion selon la revendication 1 ou 2, dans laquelle l'agent améliorant l'écoulement à froid est un copolymère d'éthylène greffé avec un éther et/ou ester à insaturation éthylénique, le copolymère d'éthylène étant un copolymère éthylène-ester vinylique.

6. Dispersion selon la revendication 5, dans laquelle l'ester à insaturation éthylénique est un ester portant des radicaux alkyle en C₁₀-C₃₀ de l'acide acrylique et/ou de l'acide méthacrylique.

7. Dispersion selon la revendication 1 ou 2, dans laquelle l'agent améliorant l'écoulement à froid est un homo- et copolymère d'a-oléfines ayant de 3 à 30 atomes de carbone.

8. Dispersion selon la revendication 1 ou 2, dans laquelle l'agent améliorant l'écoulement à froid est un produit de condensation d'au moins un phénol portant au moins un radical alkyle et d'au moins un aldéhyde ou une cétone.

9. Dispersion selon la revendication 8, dans laquelle le produit de condensation correspond à la formule (6) 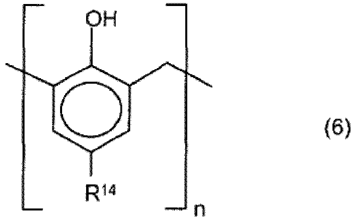 dans laquelle
R¹⁴ représente un groupe alkyle en C₁-C₁₀₀, alcényle en C₂-C₁₀₀, O-alkyle (C₁-C₁₀₀) , O-alcényle(C₂-C₁₀₀), C(O)-O-alkyle(C₁-C₁₀₀) , C(O)-O-alcényle(C₂-C₁₀₀), O-C(O)-alkyle(C₁-C₁₀₀) ou O-C(O)-alcényle(C₂-C₁₀₀), et
n représente un nombre valant de 2 à 250.

10. Dispersion selon une ou plusieurs des revendications 1 à 9, dans laquelle le sel d'un acide éthercarboxylique est préparé par neutralisation d'au moins un acide éthercarboxylique avec au moins une base des métaux alcalins ou alcalino-terreux ou une amine.

11. Dispersion selon une ou plusieurs des revendications 1 à 10, dans laquelle l'acide éthercarboxylique correspond à la formule (7)
R¹⁵-(O-CₓH₂ₓ)_{y}-OCH₂COOH (7)
dans laquelle
R¹⁵ représente un groupe alkyle ou alcényle linéaire ou ramifié ayant de 4 à 24 atomes de carbone, un groupe alkylaryle, dont le radical alkyle a de 1 à 24 atomes de carbone ou un groupe aryle,
x représente le nombre 2 et/ou le nombre 3 et
y représente un nombre de 0 à 20.

12. Dispersion selon une ou plusieurs des revendications 10 et 11, dans laquelle l'amine est une alcanolamine.

13. Dispersion selon la revendication 12, dans laquelle l'alcanolamine est une amine primaire, secondaire ou tertiaire, qui porte au moins un radical alkyle substitué par un groupe hydroxy.

14. Dispersion selon une ou plusieurs des revendications 12 et 13, dans laquelle l'alcanolamine correspond à la formule (9) :
NR¹⁶R¹⁷R¹⁸ (9)
dans laquelle
R¹⁶ représente un radical hydrocarboné ayant de 1 à 10 atomes de carbone, portant au moins un groupe hydroxy et
R¹⁷, R¹⁸ représentent, indépendamment l'un de l'autre, un atome d'hydrogène, un radical hydrocarboné éventuellement substitué ayant de 1 à 50 atomes de carbone, en particulier un groupe alkyle en C₁-C₂₀, alcényle en C₃-C₂₀, aryle en C₆-C₂₀ ou R¹⁶.

15. Dispersion selon la revendication 10 ou 11, dans laquelle l'amine est un composé hétérocyclique qui comprend un cycle ayant 5 à 7 chaînons formant le cycle qui, outre un atome d'azote, comprend un atome d'oxygène, et qui porte sur l'atome d'azote un radical alkyle ayant de 1 à 4 atomes de carbone ou un groupe de formule (10),
-(B-O)ₚ-R¹⁹ (10)
dans laquelle
B représente un radical alkylène ayant 2 ou 3 atomes de carbone, et
p représente 1 ou 2, et
R¹⁹ représente un atome d'hydrogène ou un groupe de formule -B-NH₂.

16. Dispersion selon une ou plusieurs des revendications 1 à 15, dans laquelle le tensioactif non ionique est choisi dans le groupe constitué par
a) un acide gras en C₈-C₂₀, amide d'acide gras en C₈-C₂₀, alkyl (C₅-C₁₂) phénol, alcanol en C₈-C₂₀ 1 à 80 fois éthoxylé,
b) des copolymères d'oxyde d'éthylène et oxyde de propylène, ainsi que
c) des esters partiels de polyols avec des acides gras.

17. Dispersion selon une ou plusieurs des revendications 1 à 15, dans laquelle le tensioactif non ionique correspond aux formules structurales (11) à (14) 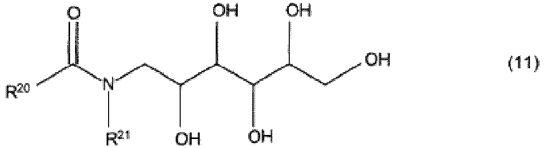 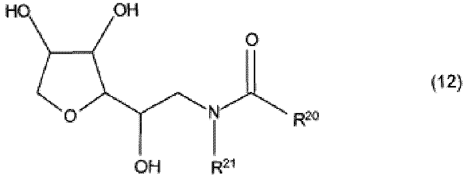 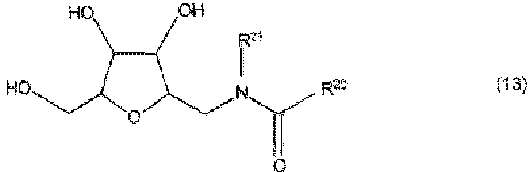 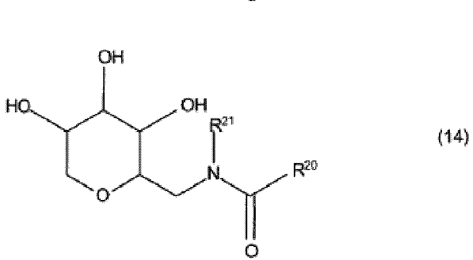 dans lesquelles
R²⁰ représente un radical hydrocarboné aliphatique ayant de 5 à 29 atomes de carbone et
R²¹ représente un radical hydrocarboné aliphatique ayant de 1 à 6 atomes de carbone, de préférence méthyle.

18. Dispersion selon une ou plusieurs des revendications 1 à 17, dans laquelle le rapport pondéral entre le sel d'acide éthercarboxylique et le tensioactif non ionique est compris entre 1:10 et 10:1.

19. Dispersion selon une ou plusieurs des revendications 1 à 18, dans laquelle le dispersant (III) comprend en outre un co-émulsifiant (VI) anionique, cationique et/ou zwitterionique.

20. Dispersion selon une ou plusieurs des revendications 1 à 19, dans laquelle le solvant (V) miscible à l'eau présente une permittivité relative εᵣ d'au moins 3.

21. Dispersion selon une ou plusieurs des revendications 1 à 20, dans laquelle le solvant (V) miscible à l'eau est choisi parmi des alcools, glycols, poly(glycol)s, acétates, cétones et lactones.

22. Dispersion selon une ou plusieurs des revendications 1 à 21, contenant 5 - 60 % en poids d'un polymère (I) liposoluble actif pour huiles minérales en tant qu'agent améliorant l'écoulement à froid.

23. Dispersion selon une ou plusieurs des revendications 1 à 22, contenant 5 - 40 % en poids de solvant (II) non miscible à l'eau.

24. Dispersion selon une ou plusieurs des revendications 1 à 23, contenant 20 - 80 % en poids d'une phase continue à base d'eau (IV) et d'au moins un solvant organique (V) miscible à l'eau.

25. Dispersion selon une ou plusieurs des revendications 1 à 24, dans laquelle la phase continue contient entre 10 et 90 % en poids d'eau (IV) et entre 90 et 10 % en poids du solvant organique (V) miscible à l'eau, par rapport à la quantité totale de la phase continue.

26. Dispersion selon une ou plusieurs des revendications 1 à 25, dans laquelle le pH de la dispersion est supérieur à 6,0, mesuré sous forme de dilution à 1 % dans de l'eau.

27. Dispersion selon une ou plusieurs des revendications 1 à 26, dans laquelle on ajoute une substance modifiant la rhéologie, engendrant une limite d'écoulement, qui consiste en un polymère hydrosoluble.

28. Procédé pour la préparation de dispersions selon une ou plusieurs des revendications 1 à 27, en convertissant en une dispersion les composants I, II, III, IV et V par mélange sous agitation à des températures supérieures à 50 °C.

29. Procédé pour la préparation de dispersion selon la revendication 28, en utilisant une solution du polymère (I) liposoluble actif pour huiles minérales en tant qu'agent améliorant l'écoulement à froid, dans le solvant organique (II) non miscible à l'eau.

30. Procédé pour la préparation de dispersion selon la revendication 28, en ajoutant un mélange des composants I et II à un mélange d'eau (IV), du solvant organique (V) miscible à l'eau ainsi que du dispersant (III), à des températures comprises entre 30 °C et 100 °C, de sorte qu'il se forme une dispersion huile-dans-eau.

31. Procédé pour la préparation de dispersions selon la revendication 28, en homogénéisant les composants I), II) et III) et ensuite en y ajoutant un mélange des composants IV et V, à des températures comprises entre 30 °C et 100 °C, de sorte qu'il se forme une dispersion huile-dans-eau.

32. Procédé pour la préparation de dispersion selon une ou plusieurs des revendications 28 à 31, en cisaillant le mélange des composants.

33. Utilisation de dispersions selon une ou plusieurs des revendications 1 à 27 pour l'amélioration des propriétés d'écoulement à froid d'huiles brutes, de fiouls, d'hydrocarbures de soute, d'huiles résiduelles ainsi que d'huiles minérales contenant des huiles résiduelles.

34. Procédé pour l'amélioration des propriétés d'écoulement à froid d'huiles brutes, de fiouls, d'hydrocarbures de soute, d'huiles résiduelles ainsi que d'huiles minérales contenant des huiles résiduelles, par addition de dispersions selon une ou plusieurs des revendications 1 à 27 à des huiles minérales paraffiniques et des produits élaborés à partir de celles-ci.
